# EUROPÄISCHE PATENTANMELDUNG

(11) **EP 1 329 281 A2**
(43) Veröffentlichungstag der Anmeldung: **23.07.2003**
(21) Anmeldenummer: 03001114.2
(22) Anmeldetag: 20.01.2003
(51) Int. Cl.: B23Q 1/48, B23Q 1/54, B23Q 39/02

(54) **Werkzeugmaschine mit Stabkinematik**

(30) Priorität: 21.01.2002 DE 10202231
(71) Anmelder: GROB-Werke Burkhart Grob e.K., 87719 Mindelheim (DE)
(72) Erfinder: Lutz, Heinrich, 87742 Dirlewang (DE); Stave, Hinrich, 87719 Mindelheim (DE)
(74) Vertreter: Pfister, Stefan Helmut Ulrich

(57) **Zusammenfassung**

Die Erfindung betrifft eine Werkzeugmaschine mit einer Werkzeugspindelhalterung, welche über mindestens einen Stab mit einem Schlittenfuß verbunden ist. Der Schlittenfuß ist auf einer Führung beweglich. Durch die Positionierung des Schlittenfußes geht eine Positionierung der Werkzeugspindelhalterung einher. Die Werkzeugspindelhalterung trägt dabei zumindest zwei Werkzeugspindeln.

## Beschreibung

Die Erfindung betrifft eine Werkzeugmaschine mit einer Werkzeugspindelhalterung, welche mit mindestens einem Stab mit einem Schlittenfuß verbunden ist. Vorgenannte Werkzeugmaschinen werden auch als Werkzeugmaschinen mit Stabkinematik beschrieben. Sie werden in der Technik auch als Hexapoden oder Werkzeugmaschinen mit Parallelkinematik beschrieben.

Von diesen Werkzeugmaschinen sind Werkzeugmaschinen mit karthesischen Achsführungen zu unterscheiden. Nachteilig bei diesen Maschinen ist, daß ein sequenzieller Aufbau der verschiedenen Achsen notwendig ist, um eine Orientierung in den drei Raumachsen zu erreichen. Dies führt zu verhältnismäßig großen, schweren Achsanordnungen und daher zu nur eingeschränkten Positioniergeschwindigkeiten aufgrund der hohen, zu bewegenden Massen.

Vorgenannten Parallelkinematiken vermeiden diesen Nachteil, trotzdem sind diese in ihrer Produktivität beziehungsweise Effizienz beschränkt.

Die Erfindung hat es sich daher zur Aufgabe gemacht, eine Werkzeugmaschine zu schaffen, die möglichst produktiv ist.

Zur Lösung dieser Aufgabe geht die Erfindung von einer Werkzeugmaschine, wie eingangs beschrieben, aus und schlägt vor, daß die Werkzeugspindelhalterung mindestens zwei Werkzeugspindeln trägt.

Die Werkzeugspindelhalterung ist über den Stab mit einem Schlittenfuß verbunden und die Bewegung beziehungsweise Positionierung des Schlittenfußes auf seiner Führung führt zu einer entsprechenden Positionierung der Werkzeugspindelhalterung und damit auch der Werkzeugspindel. Werden nun anstelle von nur einer Werkzeugspindel mehrere Werkzeugspindeln angeordnet, steigt die Produktivität, insbesondere bei im Wesentlichen symmetrischen Bearbeitungen aber auch bei jeweils getrennten Bearbeitungen. Der Aufwand zum Positionieren einer Werkzeugspindel wird deutlich reduziert, da die entsprechenden Führungen und auch der Schlittenfuß für mehrere Werkzeugspindeln gleichzeitig ausgenutzt werden kann.

Dabei wird die Gewichtskraft der Werkzeugspindeln gleichmäßig auf die Stäbe und deren Füße übertragen. Daraus resultiert, daß die tragenden Elemente gleich zu dimensionieren sind und insbesondere alle Elemente die gleiche Belastung erfahren. Es müssen keine zusätzlichen Massen mitbewegt oder beschleunigt werden, da die jeweiligen Achsen nicht übereinander angeordnet sind wie bei Werkzeugmaschinen mit karthesischer Achsführung.

Die Vorteile der Erfindung liegen darin, daß eine erhebliche Reduzierung der bewegten Massen in X-Richtung und damit verbundene Kosteneinsparungen am Ständer oder am Antrieb der X-Achse bestehen. Aber nicht nur die Konstruktion wird günstiger, die Maschine benötigt auch weniger Energie, da geringere Massen zu bewegen sind.

Das erfindungsgemäße Konzept zielt darauf ab, daß alle Stäbe beziehungsweise Gelenkarme gleichmäßig belastet werden. Im Gegensatz zu den bekannten Gelenkarmsystemen, die die verschiedenen Gelenkarme beziehungsweise Stäbe unterschiedlich belasten, wird somit eine Quelle von Ungenauigkeiten, die in den bekannten Systemen bestehen, vermieden. Es ist möglich, daß in jeder Achse der Weg direkt über einen Glasmeßstab gemessen wird.

Die erfindungsgemäße Maschine kann etwa bei gleicher Funktionalität etwas niedriger gebaut werden, wodurch die Handhabung erleichtert wird.

In einer bevorzugten Ausgestaltung der Erfindung ist vorgesehen, daß ein Gelenk zwischen dem Stab und dem Werkzeugspindelhalter vorgesehen ist und der Stab gelenkig mit dem Werkzeugspindelhalter verbunden ist. Hierdurch gewinnt der Werkzeugspindelhalter eine ausreichende Beweglichkeit bezüglich dem Stab, wie er für eine entsprechende Positionierung im Raum notwendig ist. In gleicher Weise ist es von Vorteil, wenn ein Gelenk zwischen dem Stab und dem Schlittenfuß vorgesehen ist.

In einer weiteren erfindungsgemäßen Variante ist vorgesehen, daß zwischen der Führung und dem Gestell der Werkzeugmaschine ein Gelenk vorgesehen ist. In diesem Fall wird zum Beispiel auf einen gelenkigen Anschluß des Schlittenfußes zum Stab verzichtet und die entsprechende Beweglichkeit durch ein Gelenk, welches zwischen Führung und Gestell angeordnet ist, erreicht. Günstigerweise besitzt dann der Stab eine entsprechende Schlittenführung und der gesamte Stab ist dazu geeignet auf der Führung zu gleiten und nicht nur der Schlittenfuß. Solche Varianten können insbesondere bei platzkritischen Aufgabenstellungen von Vorteil sein, wo zum Beispiel seitlich neben den Werkzeugspindeln weniger Platz besteht, aber trotzdem das erfindungsgemäße Konzept einzusetzen ist. In diesem Fall wird die Werkzeugspindelhalterung an den Stäben im Gestell aufgehängt, das heißt, der Lagerpunkt beziehungsweise das Gelenk am Gestell befindet sich über der Werkzeugspindel.

In einer weiteren erfindungsgemäßen Variante ist vorgesehen, daß der Stab koppel- beziehungsweise plattenartig ausgebildet ist. In den Figuren wird sowohl die Ausbildung als Stab wie auch die Ausbildung als Koppel gezeigt werden. Im Gegensatz zu einem Stab ist die Koppel torsionssteif. Günstigerweise wird zum Beispiel die Breite der Platte beziehungsweise Koppel der Länge der Werkzeugspindel beziehungsweise des Spindelkastens angepaßt, um ein stabiles Auflager für diesen zu bilden. Dabei ist es möglich, daß die Koppel auch rahmenartig ausgebildet ist, wodurch sich die Masse der Koppel reduziert.

In einer bevorzugten Variante der Erfindung ist vorgesehen, daß der Stab beziehungsweise die Koppel aus faserverstärktem, insbesondere kohlefaserverstärktem Kunststoff besteht. Die vorgenannten Materialien zeichnen sich dadurch aus, daß sie keine oder nur äußerst geringe Längenänderungen bei Temperaturschwankungen aufweisen. Dadurch wird die Maschine insgesamt genauer, da der Temperaturgang der bisherig bekannten Ständer nicht mehr vorhanden ist. Es ist vorgesehen, daß zwei oder mehrere Stäbe beziehungsweise Koppeln den Werkzeugspindelhalter auf je einer Führung abstützen. Die Koppeln beziehungsweise Stäbe besitzen dabei an ihrem unteren Ende den Schlittenfuß, der auf den Führungen bewegt wird. Es ist dabei vorgesehen, daß zum Beispiel zwei Stäbe beziehungsweise Koppeln parallel geführt sind und durch einen gemeinsamen oder je einen einzelnen Schlittenfuß auf einer gemeinsamen Führung geführt sind. Die Verkippsicherheit nimmt durch eine solche Ausgestaltung zu, gleichzeitig können durch solche Ausgestaltungen verhältnismäßig große Werkzeugspindelhalter zuverlässig gehalten und geführt werden.

In einer erfindungsgemäßen Alternative ist vorgesehen, daß eine veränderliche Stab- beziehungsweise Koppellänge vorgeschlagen wird. Durch eine Veränderung der Stablänge ist es möglich, in gleicher Weise eine entsprechende Positionsänderung des Werkzeugspindelhalters im Raum zu erreichen. Beispielsweise ist dabei vorgesehen, daß die wirksame Stab- beziehungsweise Koppellänge reduziert wird, in dem zum Beispiel der Stab oder die Koppel eine Führungsbahn aufweisen und schlittenartig auf einem feststehenden Führungsteil gleiten. Dadurch wird ohne Einbußen in der Stabilität, die ansonsten bei zum Beispiel teleskopartiger Ausgestaltung bestehen würde, die effektive Stab- beziehungsweise Koppellänge verändert.

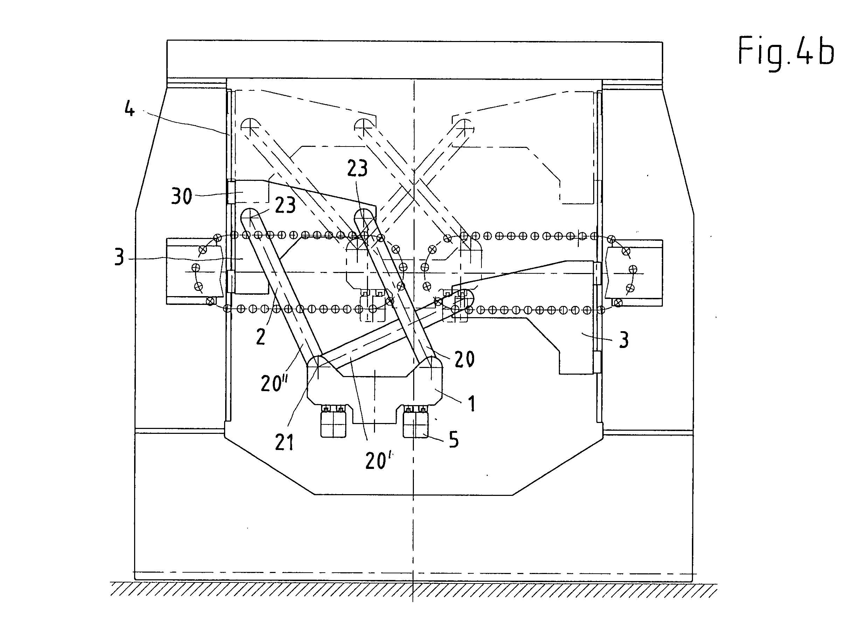

In einer weiteren erfindungsgemäßen Ausgestaltung wird vorgeschlagen, daß auf mindestens einer Führung der Werkzeugmaschine mindestens ein Schlittenfuß vorgesehen ist und jeder Schlittenfuß mindestens einen Stab oder eine Koppel gelenkig aufnimmt. Es ist zum Beispiel vorgesehen, den Werkzeugspindelhalter an zwei, zum Beispiel parallel geführten, Koppeln oder Stäben aufzuhängen. Für eine weitere Positionierung im Raum reicht ein weiterer Stab oder eine weitere Koppel aus, die einerseits an dem Werkzeugspindelhalter (gegebenenfalls auch an den anderen Koppeln) und andererseits an dem Schlittenfuß gelenkig anschließt und der Schlittenfuß auf einer Führung beweglich ist. Es wird letztendlich zum Beispiel ein Konzept vorgeschlagen, wie es in Fig. 4b bildlich dargestellt ist.

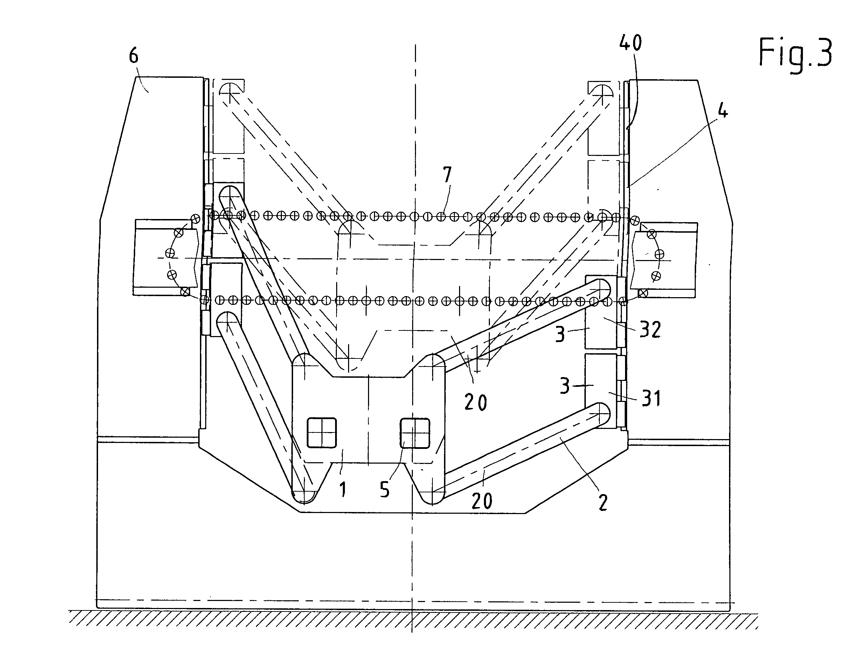

In einer anderen Variante der Erfindung ist vorgesehen, daß sich der Werkzeugspindelhalter pro Führung über zwei Stäbe beziehungsweise Koppeln abstützt und jeder Stab beziehungsweise jede Koppel über je einen eigenen Schlittenfuß auf der Führung gelagert ist. Bevorzugterweise werden die Stäbe beziehungsweise Koppel parallel geführt. Sie besitzen auch die gleiche Länge, um ein Parallelogramm aufzuspannen. Ein Beispiel dieser Maschine ist zum Beispiel in Fig. 3 gezeigt. Da im Gegensatz zu einer anderen Variante der Erfindung jeder Stab beziehungsweise jede Koppel einen eigenen Schlittenfuß besitzt, ist es möglich, diese unterschiedlich zueinander zu bewegen, um entsprechende Maß- oder Spielkorrekturen auszuführen.

Die Erfindung ist frei in der Anzahl der Führungen, die die erfindungsgemäße Werkzeugmaschine besitzt. Die Werkzeugmaschine kann optional zwei, drei oder vier Führungen aufweisen und der Werkzeugspindelhalter ist zwischen den Führungen angeordnet. Durch eine größere Anzahl von Führungen wird die Stabilität der Maschine entsprechend erhöht.

Günstige geometrische Verhältnisse werden erhalten, wenn in einer erfindungsgemäßen Variante vorgeschlagen wird, daß der Werkzeugspindelhalter über zwei Stäbe beziehungsweise Koppeln, die insbesondere parallelogrammartig ausgebildet sind, auf der Führung abgestützt ist. Durch die parallelogrammartige Führung bleibt die horizontale Ausrichtung des Werkzeugspindelhalters erhalten. Ein Verkippen wird vermieden.

Eine einfache Ausgestaltung der Erfindung ist dadurch gekennzeichnet, daß der Werkzeugspindelhalter über drei Koppeln beziehungsweise drei Stäbe auf zwei Führungen abgestützt ist.

Eine solche Variante ist zum Beispiel in der Fig. 4b gezeigt.

Es ist prinzipiell möglich, eine platzsparende Werkzeugmaschine mit den angegebenen Vorzügen hiermit zu realisieren.

In einer weiteren erfindungsgemäßen Variante ist vorgesehen, daß sich die Stäbe beziehungsweise Koppeln kreuzen. Eine solche Ausgestaltung trägt ebenfalls dazu bei, Platz an der Werkzeugmaschine zu reduzieren.

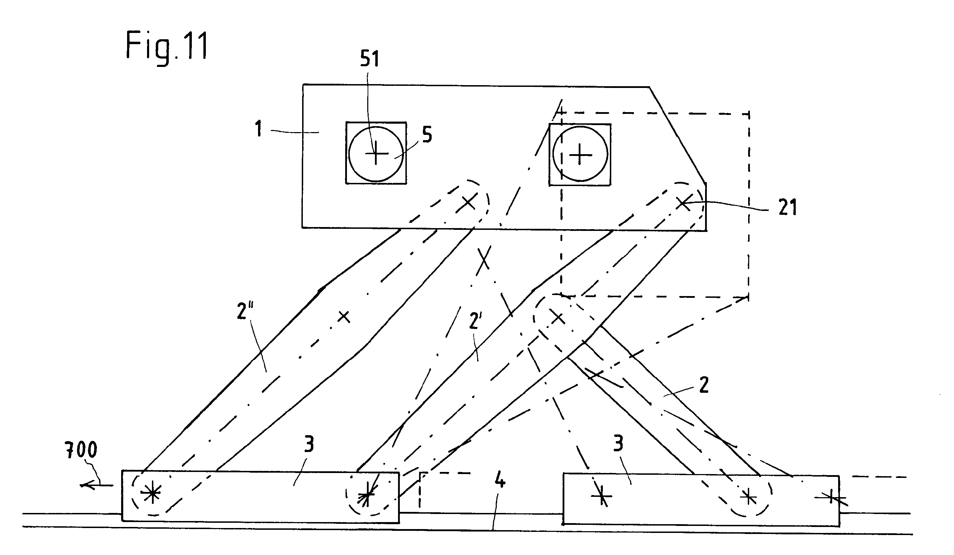

Des weiteren ist vorgesehen, daß eine erste Koppel beziehungsweise ein erster Stab durch eine zweite Koppel beziehungsweise einen zweiten Stab, insbesondere gelenkig abgestütz ist. Die Stabilität einer solchen erfindungsgemäßen Variante wird erhöht. Gerade wenn der Werkzeugspindelhalter über der Führungsbahn angeordnet ist und die Stäbe unterhalb des Werkzeugspindelhalter angeordnet sind, erlaubt eine solche Ausgestaltung eine erhöhte Stabilität. Eine solche Variante ist zum Beispiel in Fig. 11 gezeigt.

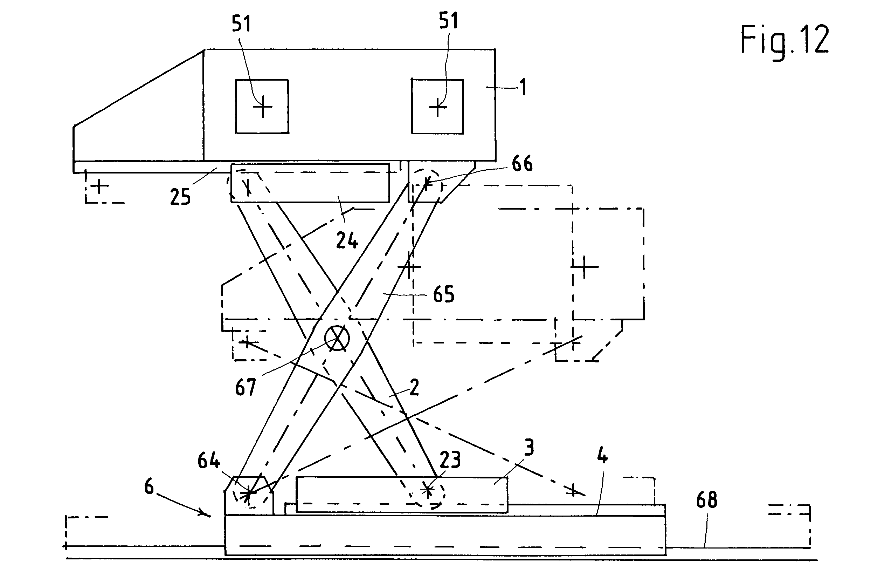

In einer weiteren Variante der Erfindung ist vorgesehen, daß die Koppel beziehungsweise der Stab am Werkzeugspindelhalter verschiebbar gelagert ist. Das zum Abstützen des Werkzeugspindelhalters auf der Führung wird hier umgedreht und am Werkzeugspindelhalter unmittelbar eingesetzt. An diesem befindet sich zum Beispiel ein schlittenartig bewegbarer Führungsfuß, der auf einer Führung, die unterhalb des Werkzeugspindelhalters angeordnet ist, verfahrbar ist. Eine solche Ausgestaltung ist zum Beispiel bei scherenartig ausgebildeten Stäben, wie zum Beispiel in Fig. 12 gezeigt, von Vorteil.

In einer anderen Variante der Erfindung ist vorgesehen, daß der Stab beziehungsweise die Koppel durch ein Kniegelenk in zwei Teile unterteilt ist. Die Erfindung ist sehr vielseitig. Durch die Aufteilung des Stabes durch ein Kniegelenk in zwei Teile werden neue Möglichkeiten eröffnet. Die gesamte Anordnung ist auf einem Schlittenfuß aufgebaut, der entlang einer Führung beweglich ist. Die insbesondere symmetrisch ausgestalteten Kniegelenke erlauben bei einer solchen Ausgestaltung eine Bewegung des Werkzeugspindelhalters in vertikaler Richtung.

Gegebenenfalls ist ein Drehantrieb vorgesehen, um eine synchrone Drehung der jeweiligen Gelenke zu erreichen und so ein Verkippen zu vermeiden. Alternativ ist hierzu vorgesehen, daß auf das Kniegelenk ein Zug- beziehungsweise Stellmittel wirkt, wobei dieses Zug- beziehungsweise Stellmittel günstigerweise auf beide Gelenke gleichzeitig wirkt.

In einer weiteren erfindungsgemäßen Variante ist vorgesehen, daß die Gelenke der beiden Stäbe oder Koppeln in Richtung der Führung hintereinander, insbesondere auf einer zur Führung parallelen Linie an dem Werkzeugspindelhalter angeordnet sind. Durch eine solche Ausgestaltung werden die geometrischen Bedingungen vereinfacht. Es ist einfach möglich, insbesondere wenn gleiche Längen der eingesetzten Stäbe beziehungsweise Koppeln berücksichtigt werden, Parallelogramme zu realisieren, die zu entsprechend gut beherrschbaren Bewegungen des Werkzeugspindelhalters dienen.

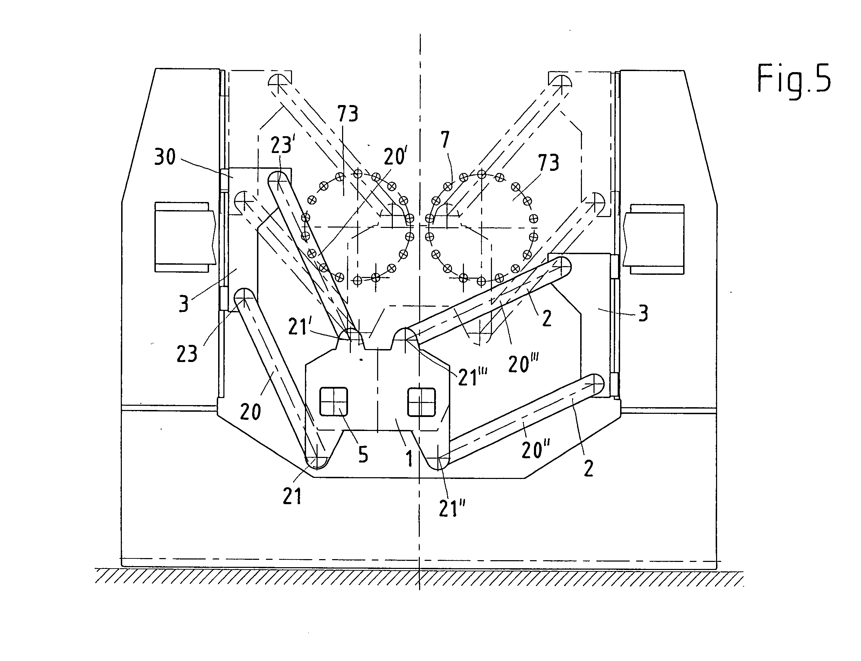

Alternativ hierzu ist es möglich, daß die Gelenke am Spindelkasten der beiden Stäbe beziehungsweise Koppeln, die sich auf einer gemeinsamen Führung abstützen, auf einer Linie angeordnet sind, die die Führung in einem spitzen Winkel schneidet. Ein solches Ausführungsbeispiel ist in Fig. 5 gezeigt.

Die verschiedenen Varianten erlauben es, die Erfindung auf unterschiedliche Verhältnisse zu optimieren. Zum einen ist es möglich, eine verhältnismäßig schmalbauende Maschine mit trotzdem ausreichender Bewegungsmöglichkeit des Werkzeugspindelhalters zu realisieren.

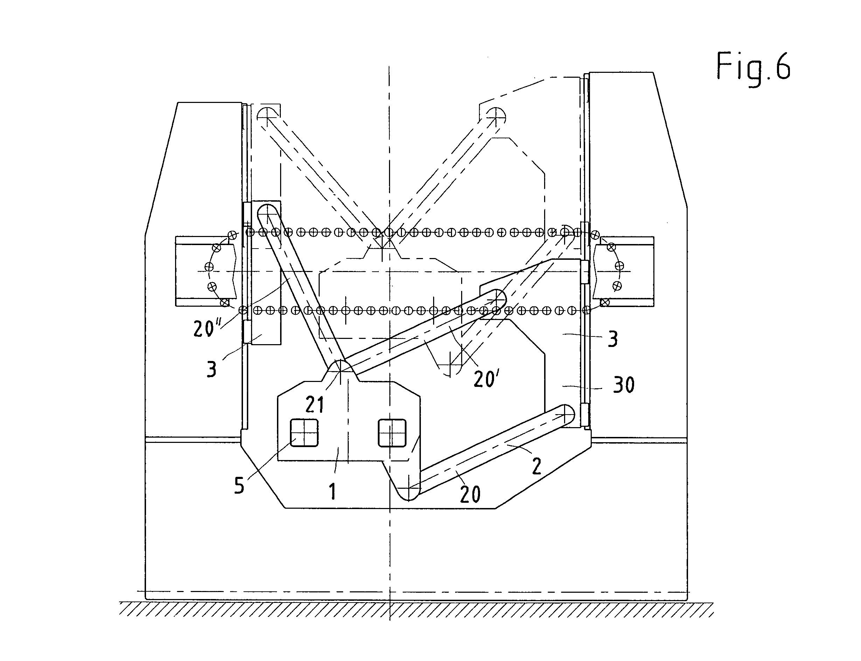

In einer weiteren erfindungsgemäßen Variante wird vorgeschlagen, daß zumindest an einem der Gelenke des Spindelkastens zumindest zwei Koppeln beziehungsweise Stäbe anschließen. Eine solche Ausgestaltung ist zum Beispiel in Fig. 6 gezeigt. Hierdurch wird ein zusätzliches Gelenk eingespart und trotzdem eine ausreichende Beweglichkeit erreicht.

Die Anordnung wird noch weiter verbessert, wenn die zwei Koppeln beziehungsweise Stäbe in einer weiteren erfindungsgemäßen Variante winkelsteif an einem gemeinsamen Gelenk des Werkzeugspindelhalters anschließen. Die beiden Koppeln bilden ein Dreieck, wodurch sich die Drehsteifigkeit um die Achse, die parallel zum Drehgelenk ist, erhöht.

Günstigerweise wird vorgeschlagen, daß der Abstand der Gelenke zwischen zwei Koppeln beziehungsweise Stäben am Werkzeugspindelhalter gleich dem Abstand der Gelenke am jeweiligen Schlittenfuß ist. Hierdurch ist es möglich, eine parallelogrammartige Führung oder auch eine scherengelenkartige Führung auszubilden.

Alternativ hierzu ist vorgesehen, daß der Abstand der Gelenke zwischen zwei Koppeln beziehungsweise Stäben am Werkzeugspindelhalter 1 ungleich dem Abstand der Gelenke am jeweiligen Schlittenfuß ist. Es bildet sich dann zum Beispiel eine trapezartige Ausgestaltung aus, die in entsprechenden Anwendungsbereichen ebenfalls Vorteile bietet.

In einer weiteren erfindungsgemäßen Variante ist vorgesehen, daß die Drehachsen der n Gelenke am Werkzeugspindelhalter 1 ein gleichzeitiges n-Eck ergeben. Eine solche Ausgestaltung führt zu einer sehr hohen Steifigkeit der Anordnung und einer gleichmäßigen Belastung.

In einer bevorzugten Ausgestaltung der Erfindung ist vorgesehen, daß für den Schlittenfuß auf der Führung ein Antrieb, insbesondere ein Spindelantrieb, Kugelrollspindelantrieb oder ein Linearantrieb vorgesehen ist.

Natürlich sind die Antriebe entsprechend positionsgenau steuerbar, damit die gewünschte Position der Werkzeugspindel im Raum erreichbar ist. Der Einsatz von Spindelantrieben beziehungsweise Kugelrollspindelantrieben hat sich dabei ausreichend bewährt. Der Einsatz eines Linearantriebes bietet zusätzlich die Möglichkeit auch eine hochdynamische Maschine zu realisieren, also eine Maschine, die in kurzer Zeit die jeweiligen Positionen zum Bearbeiten anfährt.

Die Erfindung ist im Hinblick auf die Orientierung der Spindelachse bezüglich der Führung in keinster Weise beschränkt. Es ist erfindunggemäß vorgesehen, daß die Führung im wesentlichen parallel oder auch rechtwinklig zur Spindelachse orientiert ist.

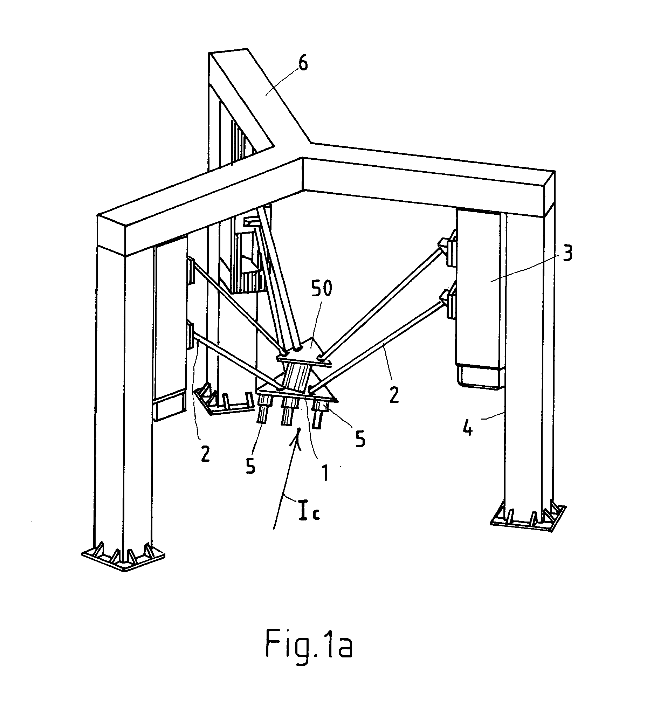

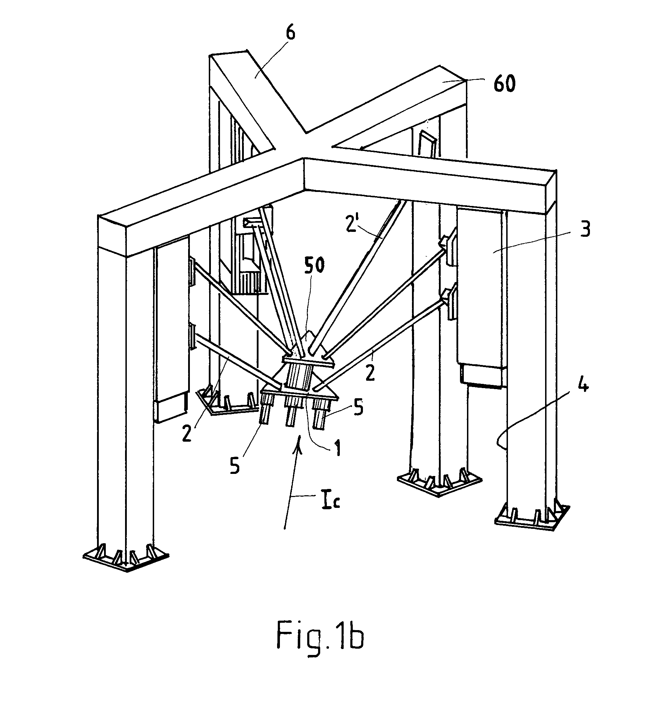

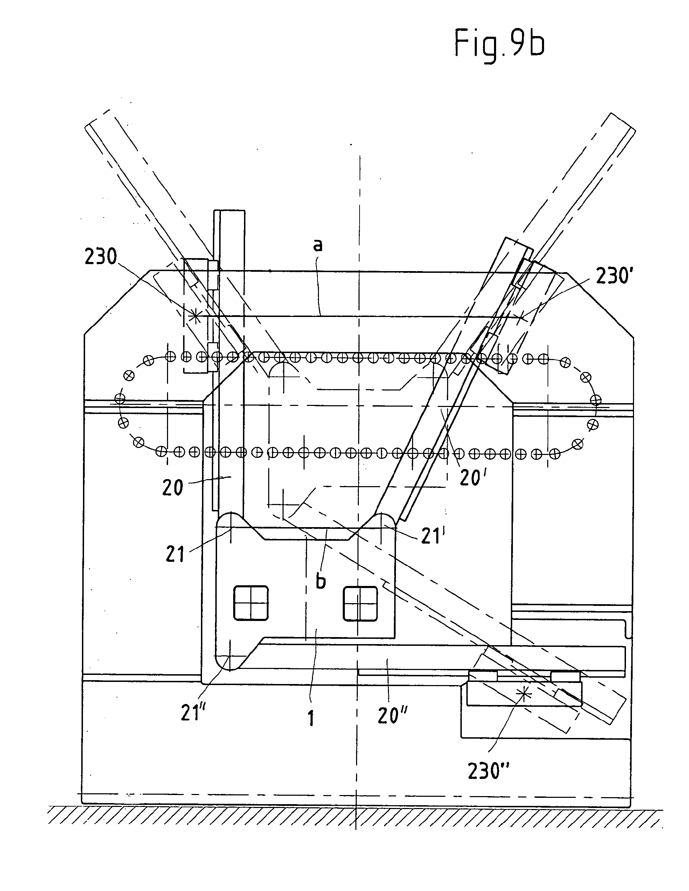

In Fig. 1a, b ist zum Beispiel eine Variante gezeigt, bei welcher die Führung vertikal orientiert ist und die Führung in diesem Beispiel parallel zur Spindelachse orientiert ist. Im speziellen Fall können auch spezielle Winkel eingeschlossen werden. Hierfür besteht ein weiterer Freiheitsgrad. In Fig. 9b ist die Führung zum Beispiel vertikal orientiert, die Spindelachse ist in diesem Fall rechtwinklig zur Führung horizontal orientiert.

Die Erfindung zeichnet sich durch eine hohe Flexibilität im Einsatz aus.

In einer weiteren erfinderischen Variante wird vorgeschlagen, daß ein L-förmiger Schlittenfuß vorgesehen ist. Die Gelenke schließen sich dabei an die jeweiligen Schenkelenden des Schlittenfußes an und befinden sich somit nicht auf einer zur Führungsbahn parallelen Linie. Dabei ist es möglich, an einem L-förmigen Schlittenfuß nur ein Gelenk anzuordnen, welches an dem von der Führung abstehenden Schenkel angeordnet ist.

Gemäß einer Weiterentwicklung der Erfindung wird vorgeschlagen, daß jeder Schlittenfuß seine eigene Führung aufweist oder eine Führung mehrere oder alle Schlittenfüße führt. Es ist zum Beispiel in der erfindungsgemäßen Variante möglich, nur eine Führung anzuordnen, auf welche alle Schlittenfüße geführt sind. Eine solche Variante ist zum Beispiel in Fig. 11 gezeigt.

In einer Variante der Erfindung ist sogar vorgesehen, daß die Führung selber schlittenartig ausgebildet ist und auf einem Führungsbahn positionierbar ist. Dadurch ist es möglich, die gesamte Anordnung zu verschieben und zu positionieren.

Die Stäbe schließen über Gelenke an dem Werkzeugspindelhalter an. Dieser ist gemäß der Erfindung beispielsweise als Spindelkasten ausgebildet und trägt zum Beispiel Pinole und Werkzeugspindel. In einer anderen Variante nimmt der Werkzeugspindelhalter einen Spindelkasten auf, also trägt diesen und besitzt noch andere Elemente. Der Spindelkasten seinerseits nimmt die Werkzeugspindel auf. In einer dritten Variante ist es möglich, daß die Werkzeugspindeln an dem Werkzeugspindelhalter hängend aufgehängt oder getragen sind.

Es ist von Vorteil, wenn der Werkzeugspindelhalter beziehungsweise der Spindelkasten aus Aluminium besteht. Zum einen wird durch die Ausgestaltung mit Aluminium Gewicht eingespart und zum anderen ist Aluminium nicht magnetisierbar, was insbesondere beim Einsatz von Linearantrieben von Vorteil ist, um zu vermeiden, daß sich Eisenspäne usw. an dem Werkzeugspindelhalter anordnen.

In einer weiteren erfindungsgemäßen Variante ist vorgesehen, daß die Werkzeugspindel beziehungsweise der Spindelkasten bezüglich der Werkzeugspindelhalterung verdrehbar ist und/oder die Werkzeugspindel auf der Werkzeugspindelhalterung sowohl in Spindelachsrichtung sowie auch rechtwinklig hierzu bewegbar und auch positionierbar ist. Diese erfindungsgemäßen Varianten bieten verschiedene Möglichkeiten. Zum einen wird durch ein Verdrehen erreicht, daß eine zusätzliche Rotationsachse für die Positionierung der Werkzeugspindel zur Verfügung steht. Auch ein Verschieben der Spindel in Achsrichtung, wie es zum Beispiel von einer Pinole geleistet wird, erlaubt es, bei einer Mehrspindelanordnung gewisse Spindeln nicht in Eingriff zu bringen. Darüberhinaus schlägt die Erfindung aber auch vor, daß entsprechende Stellmittel vorgesehen sind, um die Lage der Spindel auf der Werkzeugspindelhalterung entsprechend zu korrigieren. Es können somit entsprechende Maßtoleranzen, wo immer sie auftreten mögen, ausgeglichen werden. Dies wird zum Beispiel durch entsprechende Aktoren, zum Beispiel Piezo-Aktoren oder dergleichen erreicht.

Des weiteren ist vorgesehen, daß ein Werkzeugmagazin im Bereich der Werkzeugspinel beziehungsweise überhalb der Werkzeugspindel angeordnet ist. Der Einsatz eines Werkzeugmagazines zum Auswechseln der Werkzeuge der Werkzeugspindel ist üblich. Die Anordnung des Werkzeugmagazines erfolgt dabei so, daß der Arbeitsraum nicht verengt wird. Dabei ist es möglich, das Werkzeugmagazin absenkbar auszugestalten, wenn nämlich der Bewegungsspielraum der Anordnung nicht ausreicht, um die Spindel in eine Wechselposition zu bringen. Günstigerweise wird für jede Werkzeugspindel ein eigenes Werkzeugmagazin, gegebenenfalls ein Scheibenmagazin oder Kettenmagazin oder dergleichen vorgesehen.

Des weiteren schlägt die Erfindung vor, daß ein insbesondere am Werkzeugspindelhalter und/oder am Schlittenfuß, gegebenenfalls gelenkig gelagerter Gewichtsausgleich vorgesehen ist. Auch der Einsatz eines Gewichtsausgleichs ist im Werkzeugmaschinenbereich bekannt. Günstig ist insbesondere der Einsatz des Gewichtsausgleichs unmittelbar am Werkzeugspindelhalter, wobei hierbei eine gelenkige Abstützung von Vorteil ist. Somit erfährt der Werkzeugspindelhalter unabhängig von seiner räumlichen Lage immer einen Gewichtsausgleich.

Weitere erfindungsgemäße Merkmale ergeben sich aus der Zeichnungsbeschreibung beziehungsweise aus den Zeichnungen. Unabhängig von ihrer Darstellung werden die nachfolgenden Merkmale in verschiedenen Kombinationen beansprucht werden und sind daher jeweils eigenständig als erfindungswesentlich anzusehen.

In der Zeichnung ist die Erfindung schematisch gezeigt. Es zeigen:
- Fig. 1a, 1b: in einer dreidimensionalen Ansicht die erfindungsgemäße Werkzeugmaschine
- Fig. 1c: ein Detail der Erfindung nach Fig. 1a, b (siehe Pfeil I c)
- Fig. 2, 3, 4a, 4b, 5 bis 8, 9a, 9b, 10 bis 14: zeigen jeweils in der Ansicht weitere Varianten der erfindungsgemäßen Werkzeugmaschine

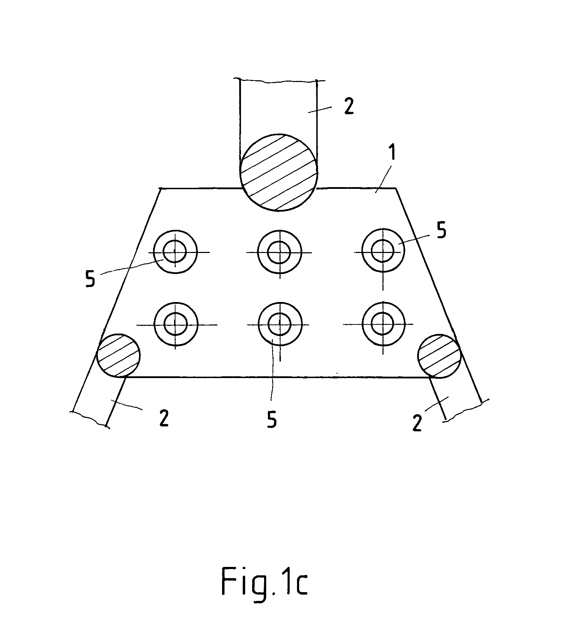

In Fig. 1 a beziehungsweise Fig. 1b ist eine Werkzeugmaschine mit sechs (Fig. 1a) beziehungsweise sieben Stäben 2, 2' (Fig. 1b) gezeigt. Die Stäbe 2, 2' können konstanter oder variabler Länge sein. Die Stäbe 2 halten einen Werkzeugspindelhalter 1 beziehungsweise verbinden den Werkzeugspindelhalter 1 mit den Schlittenfüßen 3, wobei die Schlittenfüße 3 längsverfahrbar an der Führung 4 des Gestelles 6 sind.

Der in Fig. 1b gezeigte zusätzliche Stab 2' stützt sich an der vierten zusätzlichen Gestellstütze 60 ab. Der Stab 2' ist dabei in gleicher Weise ausgestaltet wie die Stäbe 2, das heißt, beweglich gelagert. Der Stab 2', der in diesem Ausführungsbeispiel im Gegensatz zu den anderen Stäben 2 (die jeweils doppelt eingesetzt sind) ist nur einfach realisiert. Er dient dazu, die Stabilität der Positionierung zu erhöhen.

Es ist klar, daß durch diese Anordnung nicht nur eine hohe Beweglichkeit der Spindeln 5 im Raum erreicht wird, sondern auch ein Kippen des Werkzeugspindelhalters 1 im Raum möglich ist. Es können daher auch von der Vertikalen abweichende Bearbeitungswinkel realisiert werden.

In Fig. 1c ist die Unteransicht des Werkzeugspindelhalters gezeigt. Es sind eine Vielzahl von Werkzeugspindeln 5 vorgesehen. Deren Achsen sind parallel orientiert und stehen nach unten hervor. Die Stäbe 2 schließen gegebenenfalls durch ein hier nicht dargestelltes Gelenk an dem Werkzeugspindelhalter 1 an.

Das hier und in Fig. 1a gezeigte Ausführungsbeispiel des Werkzeugspindelhalter kann beispielsweise wie folgt beschrieben werden. Der Werkzeugspindelhalter 1 ist hierbei gestellartig ausgebildet mit einer unteren und einer oberen Platte. Die obere Platte 50 beschreibt bezüglich der Werkzeugspindel 5 das hintere Ende. An den jeweiligen Platten schließen die Stäbe 2 an. Dabei ist es günstig, den Anschlußpunkt der paarweise angeordneten Stäbe (bezogen auf die jeweiligen Schlittenfüße 3) so zu wählen, daß die Anordnung möglichst stabil wird. Dies wird dadurch erreicht, daß die Stäbe möglichst am vorderen und am hinteren Ende des Werkzeugspindelhalters gelenkig anschließen.

Dargestellt ist die Ausführung mit konstanter Stablänge der Stäbe 2, die Maschine kann auch mit variabler Stablänge ausgeführt sein. Die Spindeln 5 können, wie hier angedeutet, vertikal orientiert sein oder auch horizontal angeordnet sein. Der Vorteil dieser Maschinen ist eine hohe Achsdynamik, da die jeweils zu bewegenden Massen sehr gering sind. Des Weiteren bietet diese Maschine den Vorteil, daß, wenn die Spindeln 5 nur in einer Ebene angeordnet sind, der Rotationsfreiheitsgrad der Plattform (entspricht dem Werkzeugspindelhalter 1) für die Bearbeitung genutzt werden kann. Der nutzbare Rotationsfreiheitsgrad ist dabei parallel zu einer gedachten Achse, die senkrecht auf den Spindelachsen steht und alle Spindelachsen schneidet.

Nachfolgend wird der Werkzeugspindelhalter 1 auch als Plattform oder Spindelkasten beschrieben werden, ohne damit eine spezielle Ausprägung zu bevorzugen.

Die in Fig. 1 dargestellte Werkzeugmaschine besitzt entweder sechs oder sieben Stäbe 2, 2'. Mit 60 ist eine vierte Gestellstütze des Gestelles 6 gezeigt. Dieser zusätzliche Stab 2' bietet eine Stabilisierung des Werkzeugspindelhalters 1 beziehungsweise eine Verwindungssicherheit.

In einer weiteren, bevorzugten Ausgestaltung der Erfindung ist vorgesehen, daß an dem Werkzeugspindelhalter 1 mindestens eine Bearbeitungsspindel 5 relativ zur Plattform 1 entlang ihrer Längsachse verschiebbar ist.

Hier ergibt sich der Vorteil, daß durch geeignete Auswahl und Anordnung der längsverschiebbaren Spindeln bis zu drei rotatorische Freiheitsgrade der Plattform für die Bearbeitung genutzt werden können. Des Weiteren ergibt sich, daß, wenn alle oder alle bis auf eine Spindel längsverschieblich ausgebildet sind, die Maschine auch einspindelig oder mit allen Spindeln nacheinander bearbeiten kann. In diesem Fall wird auf die Option, daß die Maschine gleichzeitig mit mehreren Spindeln bearbeiten kann, bewußt verzichtet. Dies hat zum Beispiel bei sehr engen Bearbeitungstoleranzen oder beim Ausfall einer oder mehrerer Spindel/n Vorteile. Des Weiteren bietet eine solche Anordnung den Vorteil, daß gleichzeitig mehrere Werkzeuge mit unterschiedlich wirksamer Länge eingesetzt werden können.

Es ist zu beachten, daß die Stäbe 2, 2' sowohl bezüglich des Schlittenfußes 3 gelenkig als auch bezüglich des Werkzeugspindelhalters 1 gelenkig verbunden sind, woraus sich eine entsprechende Beweglichkeit im Raum und verschiedene, insbesondere bis zu drei Rotationsfreiheitsgrade ergeben.

Zusätzlich hierzu ist es möglich, daß die Plattform 1 drehbar gelagert ist, also als "Drehhalterung" ausgebildet ist.

In einer bevorzugten Ausgestaltung der Erfindung ist vorgesehen, daß eine Werkzeugspindel 5 nicht nur in Längsachse verschieblich gelagert ist, sondern relativ zur Plattform quer zu ihrer Längsachse verschiebbar oder schwenkbar ist. Dies ist zum Beispiel mittels Piezoaktoren möglich. Ein Vorteil einer solchen Maschine liegt darin, daß sämtliche Geometriefehler der Maschine und der Vorrichtung ausgeglichen werden.

Üblicherweise ist für die Führung des Schlittenfußes 3 auf der Führung 4 kein spezielles Konzept für die erfindungsgemäße Anwendung vorgesehen. Vielmehr ist es möglich, daß jedes beliebige Führungssystem für den Einsatz in der Erfindung verwendet werdet werden kann, insbesondere Spindelantriebe, Kugelrollspindelantriebe, Linearantriebe oder dergleichen.

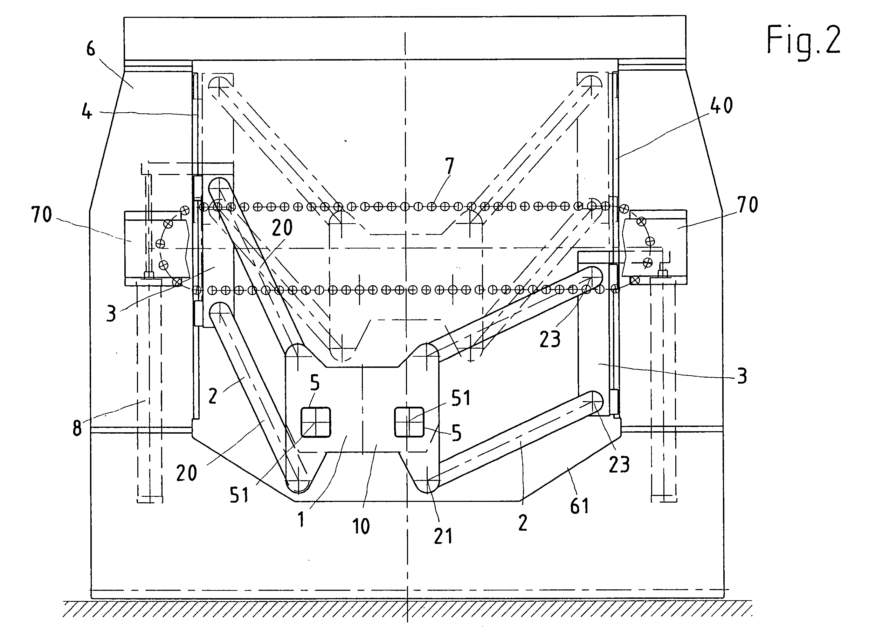

In Fig. 2 ist ebenfalls eine erfindungsgemäße Werkzeugmaschine gezeigt. Es ist eine Maschine mit mindestens zwei Hauptspindeln 5 gezeigt, die in eine Pinole geführt werden, welche die Z-Achse bildet. Die Z-Achse beschreibt daher die Längsverschieblichkeit relativ zum Werkzeugspindelhalter 1 beziehungsweise der Plattform 1.

Die Rotationsachse der Werkzeugspindel 5 ist mit 51 gekennzeichnet.

Es ist von Vorteil, daß die Werkzeugspindelachsen 51 der mindestens zwei Werkzeugspindeln 5 auf einer horizontalen Ebene liegen. Hierfür ist insbesondere vorteilhafterweise eine entsprechende Ausgleichssteuerung oder Vorrichtung vorgesehen. Hierdurch wird vorteilhafterweise erreicht, daß bei einer entsprechend horizontalen Anordnung zweier Werkstücke gleichzeitig mit den beiden Werkzeugspindeln 5 je eine Bearbeitung an zwei unterschiedlichen Werkstücken gleichzeitig ausgeführt werden kann. Der produktionstechnische Vorteil liegt auf der Hand.

In einer bevorzugten Ausgestaltung der Erfindung ist vorgesehen, daß der Stab 2, 2' koppelartig 20 ausgeführt ist. Im Gegensatz zu einem Stab, der Zug-Druck-Kräfte aufnimmt, ist die Koppel torsionssteif.

Dabei ist vorgesehen, daß die Koppel 20 insbesondere plattenartig ausgebildet ist und so eine Torsionsfestigkeit ergibt. Genauso wie der Stab 2, 2' ist auch die Koppel 20 über das Gelenk 21 gelenkig mit dem Werkzeugspindelhalter beziehungsweise der Plattform 1 oder den Spindelkasten 10, und über das Gelenk 23 gelenkig mit dem Schlittenfuß 3 verbunden.

Auch hier sind wieder zwei parallelogrammartig angeordnete Stäbe 2 oder Koppeln parallel zueinander jeweils angeordnet, um eine entsprechende Stabilität und Beweglichkeit zu erreichen.

In der Figur 2 sind zwei Positionen des Werkzeugspindelhalters 1 im Raum angedeutet. Die erste, untere Stellung ist mit durchgezogenem Strich gezeichnet, die gestrichelte Position ist darüber angedeutet. Deutlich ist zu erkennen, daß eine andere Position des Schlittenfußes 3 zu einer anderen Position des Spindelhalters 1 und damit der Werkzeugspindeln 5 im Raum führt.

In dem in Fig. 2 gezeigten Ausführungsbeispiel ist vorgesehen, daß die Bewegungsrichtung der Schlittenfüße 3 auf der Führung 4 vertikal ist. Das heißt, die Führungen 4 verlaufen vertikal, wodurch sich verschiedene Vorteile ergeben. Es ist möglich dadurch die gesamte Antriebs- und Führungsmechanik relativ hoch oben und außerhalb des Spänebereichs anzuordnen. Dadurch wird vermieden, daß bei spanabhebender Bearbeitung anfallende Späne in den Bereich der Gelenke 21, 23 und so weiter gelangen und dort eventuell die Bewegung des Stabes 2 behindern. Trotzdem erreicht die erfindungsgemäße Ausgestaltung eine Positionierung des Werkzeugspindelhalters 1 in einer Ebene (hier der Blattebene), wobei die Ausbildung der Werkzeugmaschine so gewählt ist, daß das Maschinenbett 61 als Wanne ausgebildet ist, um das ablaufende Kühlmittel aufzufangen und wieder in den Kreislauf zurückzuführen. Dadurch wird die Ausbildung von Taschen und so weiter, in denen sich Kühlmittel oder Späne ansammeln können, vermieden.

Die Verwendung einer Pinole erlaubt es, eine Späneschutzabdeckung zu realisieren, die den Arbeitsraum komplett vom Maschinenraum trennt.

In einer weiteren bevorzugten Ausgestaltung der Erfindung ist vorgesehen, daß ein Werkzeugmagazin 7 in der Werkzeugmaschine vorgesehen ist. Dieses Werkzeugmagazin 7 ist an zwei Befestigungen 70 gehalten und nimmt eine Vielzahl von Bearbeitungswerkzeugen für die Werkzeugspindeln 5 auf. Das Werkzeugmagazin 7 ist dabei über dem Werkzeugspindelhalter 1 (in seiner normalen Arbeitsposition) angeordnet. Bei Bedarf ist die Werkzeugspindel 5 am Werkzeugmagazin 7 zu positionieren und eine entsprechende Wechselvorrichtung tauscht die Bearbeitungswerkzeuge. Das Werkzeugmagazin 7 ist dabei als endlos umlaufende Kette mit entsprechenden Halterungen für die Werkzeuge ausgebildet und weist gegebenenfalls einen Antrieb auf, die eine entsprechende Positionierung des Werkzeugmagazins erlaubt. Es gibt aber auch andere Magazinkonzepte, zum Beispiel Rundscheibenmagazine und dergleichen, die gleiches leisten.

Des Weiteren ist es günstig, daß ein Gewichtsausgleich 8 vorgesehen ist. Dieser insbesondere nach dem Prinzip eines umgelenkten Gewichtes oder mit einem Spann- oder Kraftmittel, zum Beispiel einem hydraulischen Arbeitszylinder oder dergleichen funktionierenden Gewichtsausgleich 8 erlaubt es die zu bewegende Gewichtskraft zu reduzieren und dadurch mit geringeren Antriebskräften hohe Beschleunigungen der Schlittenfüße 3 auf der Führung 4 zu erreichen. Dazu ist der Gewichtsausgleich 8 in geeigneter Weise, zum Beispiel durch einen entsprechenden Träger mit dem Schlittenfuß 3 verbunden.

Die in Fig. 2 ausgebildete, erfindungsgemäße Variante ergibt eine sehr steife Konfiguration. Auf jeder Seite des Spindelkastens 10 sind zwei Koppeln übereinander angeordnet und jeder der Ständer 40 der Führung 4 trägt je einen Schlitten 3, mit dem jeweils zwei Koppeln gelagert sind. Die obere Koppel schließt dabei über der Spindel 5, die untere Koppel unterhalb der Spindel 5 an dem Spindelkasten 10 an. Es ist zu erkennen, daß die Spindelachse 51 rechtwinklig zur Führung 4 verläuft. Trotzdem wird eine stabile Lagerung erreicht, in dem nämlich die Spindel 5 zwischen den beiden Koppeln 2, 20 angeordnet sind.

In diesem Fall sind die Koppeln 20 paarweise gleichlang und parallelogrammartig angeordnet.

Zur Vereinfachung und Masseneinsparung kann auf einer Seite des Werkzeugspindelhalters eine Koppel 20 entfallen. Vorteilhafterweise wird hierbei auf die untenliegende Koppel verzichtet, da dadurch Platz im Bereich des Werkstückes eingespart wird.

Der Vorschlag einer erfindungsgemäßen Werkzeugmaschine nach Fig. 3 unterscheidet sich nur in wenigen Punkten von dem Vorschlag gemäß Fig. 2. Nach dem Vorschlag in Fig. 3 werden nicht zwei Koppeln 20 auf einen gemeinsamen Schlitten 3 gelagert, sondern jeder Koppel 20 wird ein eigener Schlitten 3 zugeordnet, die in Fig. 3 mit dem Schlitten 31 für die untere Koppel 20 und mit dem Schlitten 32 für die obere Koppel 20 gekennzeichnet sind. Zur Vereinfachung kann auf der zweiten Seite der zweite Schlitten 31 und die zweite Koppel 2 entfallen. Hieraus ergeben sich folgende Vorteile.

Für die Bewegung in der XY-Ebene (diese ist in diesem Fall die Blattebene, die Z-Achse ist die Bewegungsrichtung in der Pinole/Arbeitsspindel) sind mindestens drei Antriebe erforderlich.

Fertigungsfehler bei den Koppellängen bzw. bei den Lagerkoordinaten können durch Korrekturbewegungen der Antriebe ausgeglichen werden.

Der Spindelkasten 1 kann um die Z-Achse gedreht werden, dadurch lassen sich Fluchtungsfehler der Werkzeugmaschine bzw. der Vorrichtung (welche das Werkstück hält) korrigieren, die Anforderungen für die Fertigungsgenauigkeit der Maschinenkomponenten sinken.

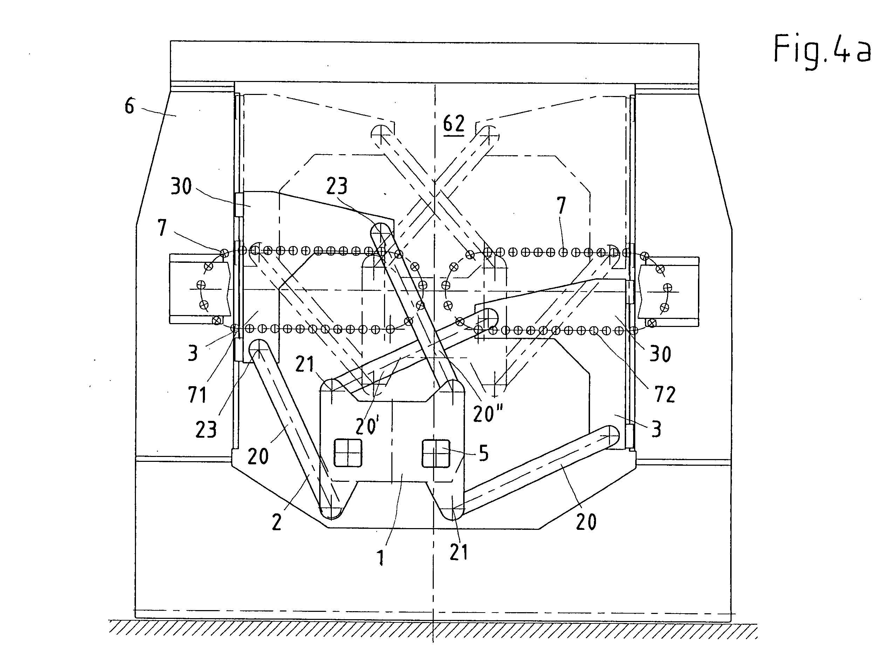

In Fig. 4 a ist eine weitere erfindungsgemäße Variante der Werkzeugmaschine gezeigt. In Fig. 2 waren die Gelenkpunkte 23, an welchen die Koppeln 20 an den Schlittenfüßen 3 gelenkig angeschlossen waren, noch vertikal übereinander, insbesondere deren Verbindungslinie parallel zur Führungsbahn der Führung 4, so ist dieser geometrische Zusammenhang bei der Lösung nach Fig. 4 a aufgehoben. Der Schlittenfuß 3 weist eine L-Form 30 auf, wobei in diesem Ausführungsbeispiel der obere Gelenkpunkt 23 von der Führung 4 weg in den Maschinenraum 62 hinein orientiert ist.

Die an dem Schlittenfuß 3 (der einteilig ausgeführt ist) angeschlossenen Stäbe bzw. Koppeln 20 weisen wiederum die gleiche Länge auf, die Anordnung der Koppeln untereinander ist wieder parallel. Es ist aber auch durchaus möglich, Koppeln bzw. Stäbe mit unterschiedlicher Länge vorzusehen. In diesem Fall ist es von Vorteil, wenn für die Koppeln mit unterschiedlicher Länge separate, eigenständige Fußschlitten vorgesehen sind.

Die in Fig. 4 a gezeigte Ausgestaltung erlaubt eine platzsparende Anordnung, da der Abstand der beiden Ständer 40, die die Führungen 4 bilden, geringer gewählt werden kann. Die Verbindungslinie der jeweiligen Gelenke 23 der Koppeln 20, die mit dem Schlittenfuß 3 verbunden sind, schneiden die Führungsbahnen in einem spitzen Winkel.

Eine weitere Maßnahme, den Raum, den die Werkzeugmaschine benötigt, zu reduzieren, ist ebenfalls in Fig. 4 a gezeigt. Die oberen Koppeln 20' und 20'', die den Werkzeugspindelhalter 1 mit dem linken bzw. rechten Schlittenfuß 3 verbindet, kreuzen sich. Dies wird durch eine entsprechende gegenseitige Aussparung der plattenartigen Koppeln 20 oder mit einem entsprechenden räumlichen Versatz erreicht. Dabei muß diese Kreuzung der Koppeln 20' bzw. 20'' nicht unbedingt einhergehen mit der L-förmigen (30) Ausgestaltung des Schlittenfußes 3, dies kann auch mit entsprechenden längeren Koppeln 20', 20'' realisiert werden. In dieser erfindungsgemäßen Variante ist es dann von Vorteil, daß die längeren Koppeln auf eigenständigen Schlittenfüßen enden. Die verschiedenen Schlittenfüße sind auch unterschiedlich bewegbar.

Auch bezüglich der Anordnung des Werkzeugmagazines 7 zeigt die Variante nach Fig. 4 a eine Alternative. An Stelle eines gemeinsamen Kettenmagazines 7 für alle Spindeln, wie es in Fig. 2 bzw. 3 gezeigt ist, wird in Fig. 4 a ein Kettenmagazin 71, 72 pro Spindel vorgesehen. Dabei ist das erste Werkzeugmagazin 71 für die linke Spindel und das zweite Werkzeugmagazin 72 für die rechte Spindel 5 vorgesehen.

Der in Fig. 4 a gezeigte L-förmige Schlittenfuß 30 ist einstückig ausgebildet. Es ist aber auch möglich, einen entsprechenden horizontalen Versatz der beiden Koppelgelenke 23 bei einer zweiteiligen Ausgestaltung des Schlittenfußes, ähnlich wie in Fig. 3, zu realisieren. Hieraus ergeben sich eine Vielzahl von Anordnungs- und Bewegungsmöglichkeiten.

Auch Fig. 4 b zeigt auf der rechten Seite einen L-förmig 30 ausgebildeten, einteiligen Schlittenfuß 3. Der linke Schlittenfuß 3 besitzt zwei Gelenke 23, an welchen je eine Koppel 20 bzw. 20'' gelenkig anschließt. Vorteilhaft bezüglich der Stabilität ist die eigentlich hängende Anordnung des Werkzeugspindelhalters 1 mit den Werkzeugspindeln 5, da der Werkzeughalter 1 über die beiden Koppeln 20, 20'' an dem linken L-förmigen Schlittenfuß 30 "aufgehängt" ist. Die Gelenke 23, an welchen die Koppeln 20, 20'' anschließen, liegen dabei auf einer im wesentlichen hori-zontal verlaufenden Linie. Die Verbindungslinie der beiden Gelenke 23 steht rechtwinklig auf der Führung 4.

Wie oben bereits erwähnt, kann auf eine doppelte Anordnung der Koppeln 20 auf einer Seite auch verzichtet werden. Für eine Positionierung des Werkzeugspindelhalters 1 im Raum sind zumindest drei Koppeln 20 notwendig. Dies ist in Fig. 4 b gezeigt. Der rechte Schlittenfuß 3 trägt nur eine Koppel 20', die an dem linken Gelenk 21 des Spindelkastens 1 anschließt. Es ergibt sich wiederum ein Kreuzungspunkt zwischen der Koppel 20', welcher an dem rechten Schlittenfuß 3 anschließt und der nach innen vorstehenden (rechten) Koppel 20 des linken Schlittenfußes 3.

Auch der rechte Schlittenfuß 3 ist L-förmig ausgebildet. Auf die L-Form kommt es hierbei nicht zwingend an. Durch Vermeidung oder Verkürzung des in dem Arbeitsraum hereinragenden Schenkels ist es möglich, die Maschine schmäler zu bauen.

Für die Verbindung der Koppel 20' (des rechten Schlittenfußes 3) an dem Gelenk 21 des Werkzeugspindelhalters 1 bestehen nun zwei Varianten. In einer ersten Variante ist der Winkel zwischen der Koppel 20' und 20'' fest und die Länge der Koppel 20' variabel. In einer anderen Variante sind die jeweiligen Längen konstant und der Winkel zwischen der Koppel 20' und 20'' bei einer entsprechenden Positionierung variabel. Durch die Bewegung des rechten Schlittenfußes 3 erfährt der Spindelkasten 1 (und die daran hängenden Werkzeugspindeln 5) eine Verschwenkbewegung um die Gelenke 23 des linken Schlittenfußes 3. Auf Grund der parallelogrammartigen Koppeln 20'', 20 bleibt die horizontale Anordnung der Werkzeugspindeln 5 zueinander erhalten.

Im Gegensatz zu den insbesondere in Fig. 4 a gezeigten Ausgestaltung des Werkzeugspindelhalters 1 und den daran befestigten bzw. eingebetteten Werkzeugspindeln 5 ist in der Variante nach Fig. 4 b gemäß der Erfindung vorgesehen, daß sich die Werkzeugspindeln 5 unterhalb des eigentlichen Werkzeugspindelhalters 1 befinden. In dieser Variante sind sie nicht eingebettet.

Der Vorteil einer Anordnung der Spindeln 5 unterhalb des eigentlichen Spindelkastens 1 (aufgehängt) ergibt besonders einen leichten Spindelkasten, das heißt, die bewegten Massen werden deutlich verringert.

In Fig. 5 ist eine weitere erfindungsgemäße Variante der Werkzeugmaschine gezeigt. Ähnlich wie Fig. 4 a zeigt diese Variante L-förmig (30) Schlittenfüße 3. Diese sind allerdings nicht so stark dimensioniert wie in Fig. 4 a, das bedeutet, der horizontale Versatz der Gelenke 23, 23' der Koppeln 20, 20' ist geringer als in Fig. 4 a.

Im Gegensatz zu dem Vorschlag nach Fig. 4 a zeigt Fig. 5 auch einen horizontalen Versatz der Lage der Gelenke 21, 21'' bzw. 21' und 21 ''', an welchen die Koppeln 20 (am Gelenk 21), die Koppel 20' (am Gelenk 21'), die Koppel 20'' (am Gelenk 21'') und die Koppel 20''' (am Gelenk 21''') des Werkzeugspindelhalters 1 gelenkig angeschlossen sind. Die Koppeln 20'' und 20''' befindet sich dabei auf der rechten Seite des Werkzeugspindelhalters 1 und verbinden diese mit dem rechten Schlittenfuß 3. Auch solch eine Anordnung kann für eine entsprechend schmale Ausgestaltung einer erfindungsgemäßen Werkzeugmaschine bevorzugt verwendet werden.

Der horizontale Versatz der Lage der Gelenke 21, 21' kommuniziert hierbei mit dem horizontalen Versatz der Gelenkpunkte 23, 23' an dem Schlitten 3. Es resultiert bei gleich langer Ausgestaltung der Stäbe 2 bzw. Koppeln 20 usw. eine parallelogrammartige Ausgestaltung.

In der in Fig. 5 dargestellten erfindungsgemäßen Variante wird ein Scheibenmagazin 73 als Werkzeugmagazin 7 vorgesehen. Für jede Spindel 5 ist dabei ein eigenständiges Scheibenmagazin 73 vorgesehen.

In Fig. 6 ist eine weitere erfindungsgemäße Variante gezeigt. Ähnlich wie bei Fig. 4 b greifen am Spindelkasten 1 zwei Koppeln 20' und 20'' an der gleichen Lagerachse 21 des Spindelkastens 1 an.

Die Position dieser Achse ist somit durch die Position der Fußpunkte dieser Koppel eindeutig definiert. Für eine Stabilisierung ist zumindest eine dritte Koppel 20 (zum Beispiel auf der rechten Seite) notwendig, um die Orientierung des Spindelkastens 1 um die Z-Achse (rechtwinklig auf Plattebene) zu definieren. Diese Koppel 20 kann wahlweise einen eigenen Schlitten erhalten, wodurch sich eine Orientierung des Spindelkastens regelbar ergibt, oder aber zusammen mit einer anderen Koppel 20' auf einem gemeinsamen Schlitten gelagert sein und/oder mit diesem ein Parallelogramm bilden, wie dies gezeigt ist. Wahlweise kann dieser Schlittenfuß 3 in L-Form oder gerade ausgebildet sein (wie zum Beispiel in Fig. 2).

Die vorbeschriebene in Fig. 6 dargestellte Ausführungsform der Erfindung bietet folgende Vorteile. Die Maschine wird schmaler. Die Masse des Spindelkastens 1 kann verringert werden, da weniger Gelenkaufnahmepunkte vorzusehen sind. Die Kinematik wird leichter zu bestimmen sein, da mit einfacheren Bewegungsgleichungen die Anordnung betreibbar ist. Des Weiteren ergibt sich eine höhere Drehsteifigkeit um die Z-Achse, da die beiden Koppeln 20' und 20'' ein Dreieck bilden (mit festen Winkeln zwischen den Koppeln), ähnlich wie das oben bei Fig. 4b bereits alternativ vorgeschlagen wurde.

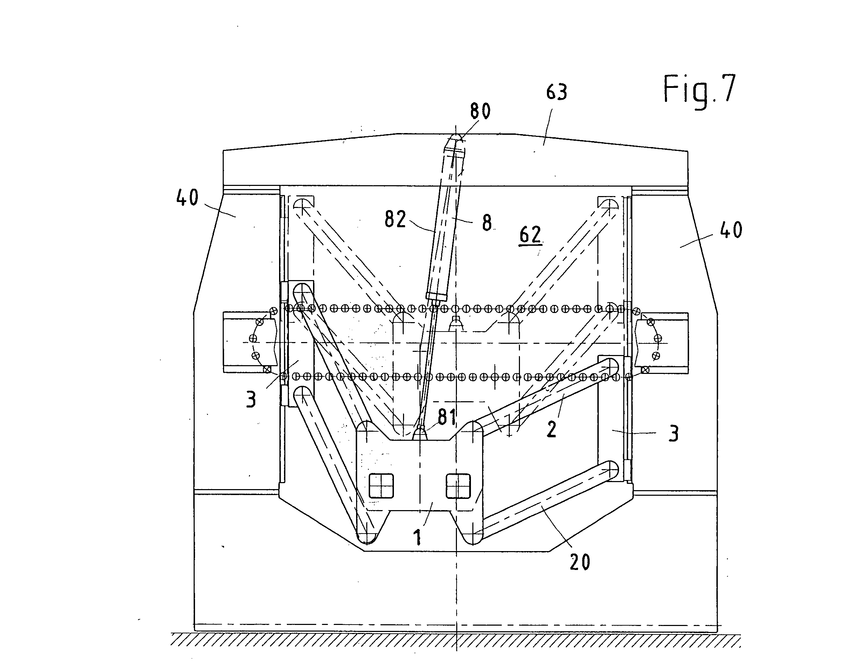

Fig. 7 ähnelt in der Ausgestaltung der Fig. 2. In Fig. 2 ist insbesondere ein Gewichtsausgleich 8 vorgesehen, wobei bei der Ausgestaltung nach Fig. 2 die Ausgleichskraft links und rechts des Spindelkastens angeordnet ist und insbesondere abhängig ist vom Positionsunterschied des rechten und linken Schlittenfußes 3 gesteuert wird.

Alternativ hierzu ist in Fig. 7 ein zentraler Gewichtsausgleich 82 vorgesehen, der an einem Querträger 63 des Gestells 6 mit dem Gelenk 80 gelenkig angeschlossen ist. Der Träger 63 verbindet dabei die im wesentlichen vertikal stehenden Ständer 40 oben und begrenzt den Arbeitsraum 62 in der Höhe. Der Gewichtsausgleich 8 ist dabei als (hydraulisch/pneumatisch wirkender) Arbeitszylinder beispielsweise ausgebildet und erlaubt aufgrund der gelenkigen Lagerung 80 am Träger 63 auch die verschiedenen Positionen in der XY-Ebene des Werkzeugspindelhalters 1 mitzumachen. Der zentrale Gewichtsausgleich 82 ist dabei im wesentlichen mittig am oberen Ende des Werkzeugspindelhalters 1 ebenfalls gelenkig mit dem Gelenk 81 verbunden. Der Gewichtsausgleich 8 übernimmt dabei einen Teil der Haltekraft (gegebenenfalls einen Großteil) für den Spindelkasten 1, dabei lastet nicht mehr das gesamte Gewicht auf den Schlittenfüssen 3. Die Anordnung des Gewichtsausgleiches über dem Spindelkasten 1 bietet den Vorteil, daß eine Verschmutzung durch Späne usw. bevorzugt vermieden wird.

Der Gewichtsausgleich 8 nach Fig. 2 und der Gewichtsausgleich 8/82 nach Fig. 7 sind natürlich nach einer Weiterentwicklung der Erfindung gegebenenfalls miteinander kombinierbar, das heißt, links und rechts sowie zentral ist je ein Gewichtsausgleich vorgesehen.

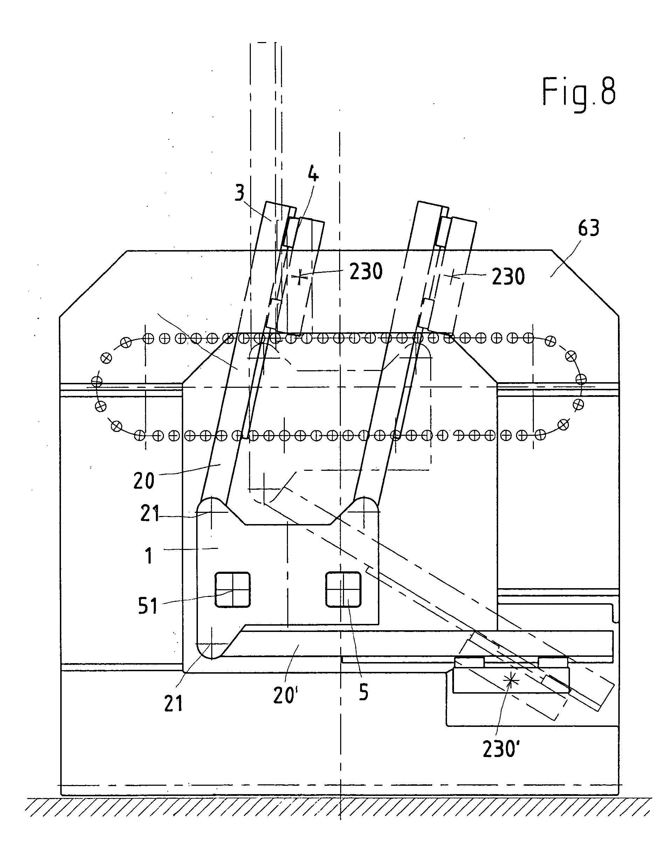

Eine erfindungsgemäße Variante ist auch in Fig. 8 angedeutet. In diesem, hier ebenfalls zur Erfindung zählenden Konzept, bilden der Stab 2 und der Schlittenfuß 3 eine Einheit. Diese beiden Bauteile sind hybridisiert. Die Führung 4 befindet sich dabei über dem Kniegelenk 23 an dem Träger 63 verschieblich gelagert. Wiederum ist der Stab 2 über dem Schlittenfuß 3 in seiner Lage veränderbar, wodurch sich auch die Stellung beziehungsweise Positionierung des Werkzeugspindelhalters 1 im Raum verändert. War bei der Ausgestaltung nach Fig. 2 die Führungsbahn 4 im Raum festgelegt, aufgrund der Ausbildung als Ständer, so ist nunmehr die Ausrichtung der Führungsbahn 4 drehbar um das Gelenk 23. Daher ist es möglich, den Stützenfuß als oberes Ende des Stabes 2 beziehungsweise der Koppel 20 an dieser auszubilden.

Das in Fig. 8 dargestellte Konzept entspricht letztendlich einer kinematischen Umkehr des in Fig. 2 gezeigten Konzeptes. Tatsächlich verbleibt es bei einer Längsverschiebung des Schlittenfußes auf seiner Führung, was zu einer entsprechenden Positionsänderung des Spindelkastens und damit der Werkzeugspindel 5 führt. Zusätzlich kann durch dieses Konzept die wirksame Länge des Stabes 2 beziehungsweise der Koppel 20 in eleganter Weise verändert werden, ohne dabei zum Beispiel durch entsprechende, teleskopartige Ausgestaltungen die Stabilität, also die Festigkeit und damit die mechanische Belastbarkeit über Gebühr zu reduzieren.

In Fig. 8 ist die vorbeschriebene Baugruppe von Koppel 20/Stab 2, Fußpunkt 3, Führung 4 drei mal verbaut. Es können aber auch Mischformen vorgesehen sein, wo also das Konzept von Fig. 8 zum Beispiel einmal und das Konzept nach Fig. 2 auch einmal oder zweimal usw. realisiert wird.

Die Koppel 20 ist wiederum über ein Gelenk 21 mit dem Werkzeugspindelhalter 1 gelenkig verbunden. Das Werkzeugmaschinengestell 6 weist wiederum einen oben angeordneten Träger auf, auf welchem die Gelenke 23 (auf einer Ebene) angeordnet sind, an welchem die jeweiligen Führungen 4 usw. sich abstützen. Der Werkzeugspindelkasten 1 ist wiederum bei der Ausgestaltung nach Fig. 8 an den Koppel 2, 20 aufgehängt. Eine in gleicher Weise ausgebildete Koppeleinheit ist rechts von dem Spindelkasten 1 vorgesehen, wobei auch diese Koppeleinheit 20' um den Drehpunkt 23' sich verschwenkt, wenn die Anordnung im Raum positioniert werden soll. Die in Fig. 8 gezeigte Ausgestaltung bildet wieder ein Parallelogramm zwischen den beiden, über dem Spindelkasten 1 angeordneten Koppeln 20 aus. Der Abstand zwischen den beiden Gelenken 23 ist dabei im wesentlichen gleich wie der Abstand der jeweiligen Gelenke 21 der beiden Koppeln. Von diesem geometrischen Zusammenhang kann natürlich im Sinne der Erfindung auch abgewichen werden.

Der Vorteil der in Fig. 8 dargestellten Variante liegt darin, daß die hier dargestellte erfindungsgemäße Werkzeugmaschine sehr schmal baut. Die für die Positionierung des Werkzeugspindelhalters 1 notwendigen Stäbe sind über dem Werkzeugspindelhalter angeordnet und nicht an der Seite, wie zum Beispiel in dem Ausführungsbeispiel nach Fig. 7. Diese die Last aufnehmenden Elemente sind weiter oben gelagert und benötigen somit nicht Platz an der Seite. Zwar ist die dritte Koppel rechts seitlich angeordnet, aber selbst diese könnte zum Beispiel unterhalb der Werkzeugspindel vorgesehen werden.

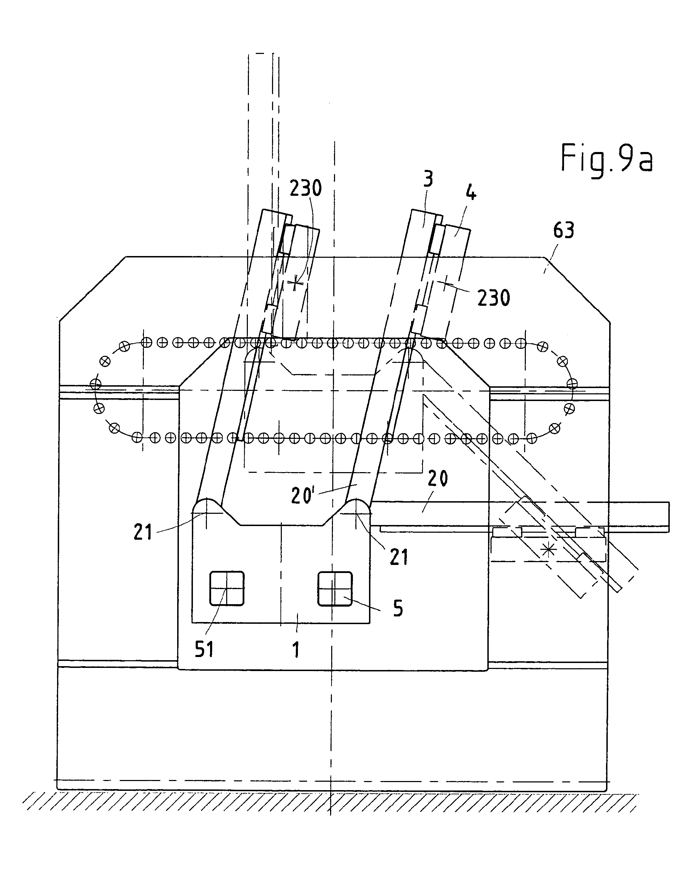

Fig. 9a zeigt eine erfindungsgemäße Variante zu dem Vorschlag nach Fig. 8. Bei Fig. 8 ist die Koppel 20', welche den Werkzeugspindelkasten 1 seitlich führt, unterhalb der Werkzeugspindelachse 51 über dem Gelenk 21 angeschlossen. Hieraus resultiert eine verhältnismäßig tiefe Anordnung der Koppel 20' und der dazu gehörigen Führungselemente (Gelenk 230' usw.). Im Gegensatz hierzu ist die rechte Koppel 20 in Fig. 9 über der Spindelachse 51 angeordnet und teilt sich mit der Koppel 20' das Gelenk 21. Die beiden Koppeln 20, 20' sind aber bei dieser Variante nicht winkelsteif miteinader verbunden, sondern zueinander beweglich. Dies wird insbesondere in der gestrichelten zweiten Stellung deutlich. Diese Variante ist bezüglich einer drohenden Verschmutzung aufgrund der spanabhebenden Bearbeitung günstiger. Auch hier gibt es wieder den Vorteil, daß bei einer gleichzeitigen Ausnutzung des Gelenkes 21 durch Koppel 20 beziehungsweise Koppel 20' aus einer Viergelenkkette eine Dreigelenkkette wird, die in sich verdrehsteifer um die Z-Achse ist.

Die Ausgestaltung der Erfindung nach Fig. 9b geht aus von dem Vorschlag nach Fig. 8. Bei der Lösung nach Fig. 8 war die Länge des Abstandes der Gelenkpunkt 23 der über der Spindel angeordneten Führungen 4 gleich dem Abstand der damit zu kommunizierenden Gelenke 21, mit welchen die Koppeln 20 mit dem Werkzeugspindelkasten 1 verbunden sind.

Hiervon wird in dem Vorschlag nach Fig. 9b abgewichen.

In Fig. 9b ist mit a der Abstand der Gelenke 230, 230' der beiden Koppeln 20, 20' gekennzeichnet. Dieser Abstand ist deutlich größer als der Abstand b, der zwischen den beiden Gelenken 21, 21' besteht, durch welchen der Werkzeugspindelhalter 1 mit den jeweiligen Koppeln 20, 20' verbunden ist.

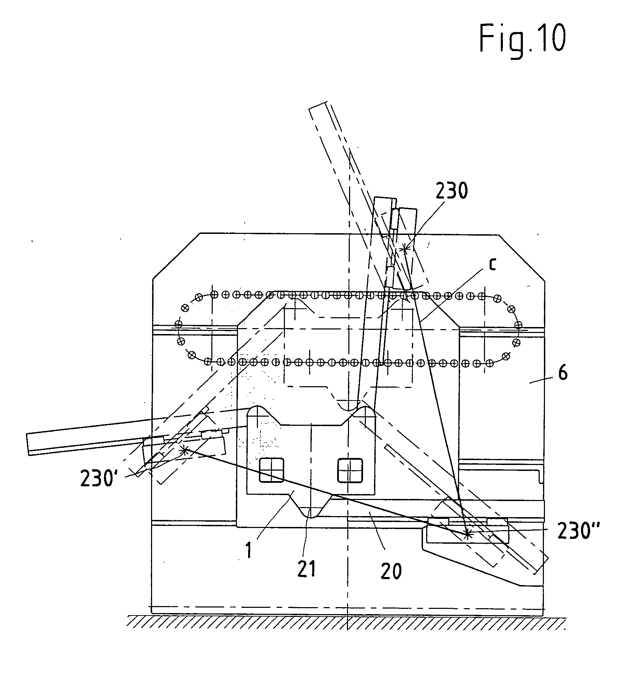

In Fig. 9b bilden die jeweiligen Gelenke 230, 230' und 230'' ein unregelmäßiges Dreieck (nicht gleichschenklig, nicht gleichseitig oder rechtwinklig). Die Anordnung der Gelenkpunkte 230, 230' und 230'' ist eher zufällig. Hiervon weicht der Vorschlag nach Fig. 10 ab. Die Anordnung der Gelenke 230, 230' und 230'' am Gestell 6 ist so gewählt, daß sich ein gleichseitiges Dreieck C ergibt. Es wird dabei auf möglichst große Schenkellänge geachtet, um eine möglichst hohe Steifigkeit zu erreichen. Die untere Koppel 20 ist dabei über das Gelenk 21 mit dem Werkzeugspindelhalter 1 verbunden, wobei der Anlegepunkt 21 bezüglich des Werkzeugspindelhalters 1 mittig gewählt ist. Bei der Variante nach Fig. 9b ist der Angriffspunkt der unteren Koppel 20'' über das Gelenk 21'' im linken Bereich des Spindelhalters 1.

Für den Fall, daß mehr als drei Koppeln 20 vorgesehen sind, sind die N Gelenke 23 so anzuordnen, daß sich ein N Eck mit möglichst großem, beschriebenen Kreis ergibt, um eine hohe Steifigkeit zu erreichen. Der Vorteil einer solchen Ausgestaltung liegt darin, daß der Spindelkasten 1 dann besonders steif (inbesondere hinsichtlich unerwünschter Rotationen um die Z-Achse) geführt ist.

In Fig. 11 ist eine weitere erfindungsgemäße Variante gezeigt. Die Schlitten 3 sind auf einer im wesentlichen horizontal orientierte oder geneigte Führung 4 verschieblich gelagert. In diesem Beispiel sind alle Schlitten 3 auf einer Führung 4 vorgesehen. Der linke Schlitten 3 trägt über zwei Koppeln 21' und 22' den Werkzeugspindelhalter 1 mit zwei Werkzeugspindeln 5. Die rechte dieser beiden Koppeln 2' wird abgestützt über einen weiteren Stab 2, welcher seinerseits ebenfalls auf der gleichen Führungsbahn über den Schlittenfuß 3 verschiebbar ist. Es kann hierfür auch eine andere Führungsbahn, auch eine andersförmig geneigte oder angeordnete Bahn vorgesehen sein. Der Stab 2 kann alternativ auch am Gelenkpunkt 21 angreifen. Hierdurch wird ein weiteres Gelenk gespart. Die Bewegung des Schlittenfußes ist mit dem Pfeil 700 angedeutet.

Die hier dargestellte Ausgestaltung erinnert an ein Lambda. Die Anordnung erlaubt eine hohe Beweglichkeit im Raum und verzichtet auf eine entsprechend aufwendige Ausgestaltung eines Maschinengestells.

Fig. 12 zeigt eine weitere interessante Variante der Erfindung. Der Werkzeugspindelhalter 1 ist über eine Koppel 65 über die Gelenke 66 und 64 auf dem Gestell 6 abgestützt.

Gleichzeitig ist der Werkzeugspindelhalter 1 über den Stab 2 und dem Schlittenfuß 3 abgestützt. Der Schlittenfuß 3 bewegt sich, wie bereits beschrieben, auf der Führung 4. Der Stab 2 ist nun gelenkig, scherenartig durch das Gelenk 67 mit dem Stab verbunden. Gleichzeitig befindet sich an dem Werkzeugspindelhalter 1 ein schlittenartig bewegbarer Führungsfuß, der auf der Führung 25, der unterhalb des Spindelkastens 1 angeordnet ist, verfahrbar ist. Hieraus folgt, daß bei einer entsprechenden Bewegung des Schlittenfußes 3 auf seiner Führung 4 in gleichem Maße (bei symmetrischer Aufteilung) auch der Führungsfuß 24 auf der Führungsbahn 25 nach links versetzt wird und über das Scherengelenk 67 die Koppel 65 abgesenkt wird. Dadurch wird der gesamte Werkzeugspindelhalter 1 abgesenkt beziehungsweise im Raum positionierbar. Zusätzlich ist vorgesehen, daß die Führung 4 selber schlittenartig ausgebildet ist und auf der Führungsbahn 68 beweglich gelagert ist. Dadurch wird eine bewegliche Anorddnung des Werkzeugspindelhalters 1 auf einer Fläche in zwei übereinander gelagerten translatorische Bewegungen einmal des Schlittens 3 auf der Führung 4 und zweitens der Führung 4 (seinerseits als Schlitten) auf der Führung 68 erreicht. Alternativ ist dies erreichbar, wenn sowohl das Gelenk auf einem eigenen Schlittenfuß beweglich auf der gleichen Führungsbahn gelagert ist wie der Schlittenfuß 3.

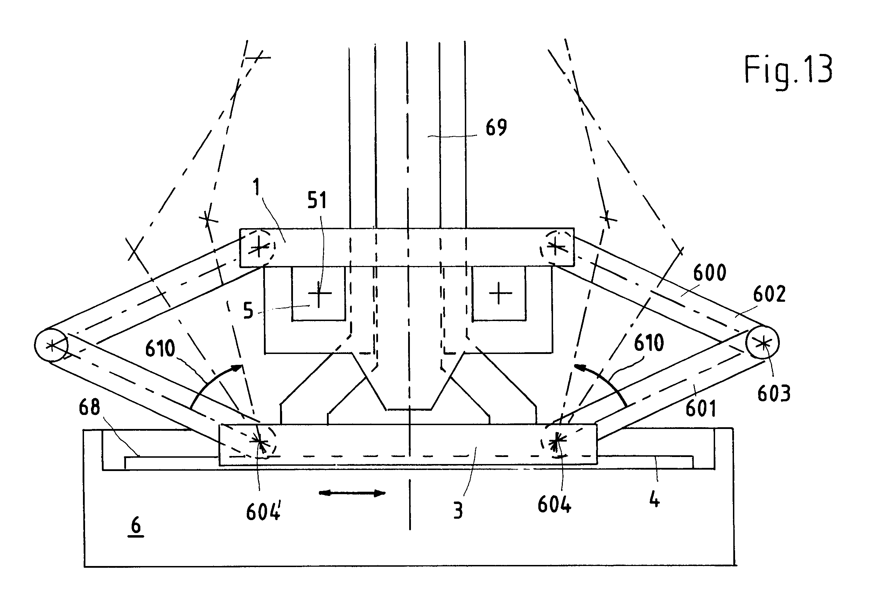

Ein weiteres, erfindungsgemäßes Konzept ist in Fig. 13 gezeigt. Der Werkzeugspindelhalter 1 ist auf der Führung 69 beweglich gelagert. An dem Werkzeugspindelhalter 1 greift ein Kniegestänge beidseitig, links und rechts, seitlich an. Das Kniegestänge besteht aus zwei Koppeln 601 und 602, die am Kniegelenk 603 miteinander verbunden sind. Bei dieser erfindungsgemäßen Variante ist die Koppel 2 aufgeteilt in die beiden Koppeln 601, 602 und Kniegelenk 603. Die Koppel 601 ist über das Gelenk 604 auf dem Schlitten 3 gelagert, der auf der Führung 4 bewegbar ist. Durch eine synchrone Drehung der beiden Gelenke (siehe Pfeile 610) 604, 604' ergibt sich eine entsprechende Auslenkung des Kniegestänges 600 und damit auch eine Veränderung der Höhenlage des Werkzeugspindelhalters 1. Gleichzeitig ist es möglich, die gesamte Vorrichtung auf der Führung 68 (gegebenenfalls identisch mit Führung 4) zu verschieben und damit auch eine Bewegung im Raum zu erzielen.An Stelle der Drehung der Gelenke 604, 604' kann der Werkzeugspindelhalter mittels Kugelrollspindel oder Linearmotor entlang der Führung 69 bewegt werden. Die Koppeln 601 und 602 haben dann die Funktion den Werkzeugspindelkasten seitlich und in der Zeichnungsebene zu stabilisieren, um die Masse der mirfahenden Führungen 69 erheblich zu reduzieren.

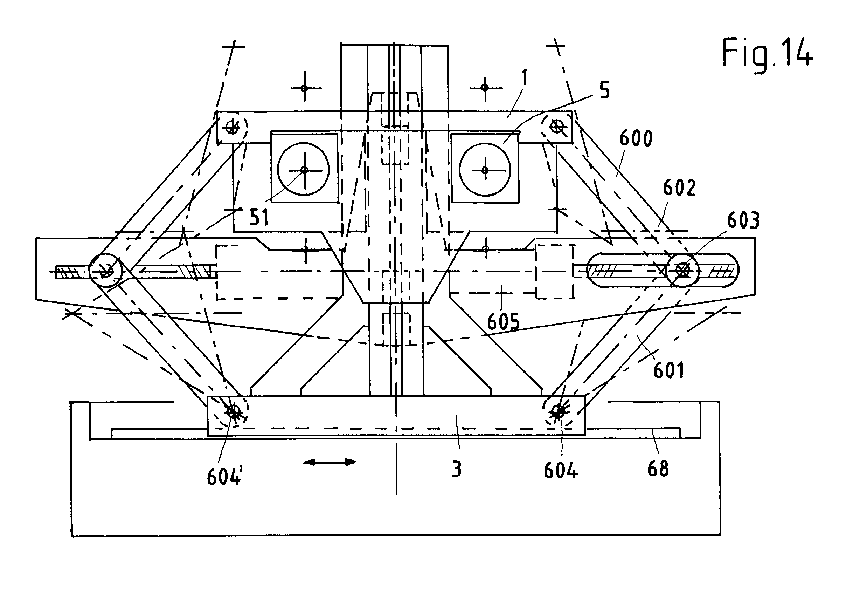

An diesem Gedanken aufbauend zeigt Fig. 14 eine weitere Variante. Wiederum ist ein Kniegestänge 600 vorgesehen, allerdings greift im Gelenk 603 ein Zugmittel 605 an, welches das Gelenk 603 anzuziehen beziehungsweise abzustoßen vermag. Dadurch wird der Spreizwinkel zwischen den beiden Stäben 601, 602 verändert und dadurch auch die Höhenlage des Werkzeugspindelhalters 1 verändert. Bei dieser Variante ist vorgesehen, daß der Abstand der Gelenke 604, 604' konstant ist, das Zugmittel 605 ist beidseitig angeordnet. Für eine Positionierung in der XY-Fläche ist vorgesehen, daß der Schlitten 3 auf der Führungsbahn 68 beweglich ist.

Des weiteren betrifft die Erfindung eine Maschine, wobei mindestens zwei Hauptspindeln vorgesehen sind, die in mindestens einer Pinole entlang der Z-Achse verfahrbar sind. Die Pinolen ist/sind in einem gemeinsamen Spindelkasten geführt. X- und Y-Achse werden durch mindestens zwei oder drei Koppeln gebildet. Mindestens eine dieser Koppeln ist ein torsionssteifer Kasten. Rechts- und links vom Spindelkasten befindet sich je ein vertikal angeordneter Ständer, der je zwei Linearführungen und mindestens einen Antrieb für mindestens einen Schlitten trägt. Einer der beiden Ständer trägt die vertikal verschieblich gelagerten Fußpunkte von mindestens zwei Koppeln, der andere Ständer von mindestens einer Koppel.

In einer Variante der Erfindung ist vorgesehen, daß pro Seite des Spindelkastens gleich lange Koppeln vorgesehen sind. Es können also links und rechts unterschiedliche Kopellängen vorgesehen werden.

Es ist auch vorgesehen, daß die Fußpunkte aller Koppeln jeder Seite des Spindelkastens auf dem selben Schlitten gelagert sind und daß die Lagerpunkte so gewählt sind,daß ein Parallelogramm entsteht.

Außerdem ist vorgesehen, daß in allen Achsstellungen bei allen Koppeln der ständerseitige Fußpunkt nicht tiefer liegt, als der spindelkastenseitige, wodurch vermieden wird, daß sich Taschen bilden können, in denen sich Kühlmittel usw. sammeln kann.

Es ist vorgesehen, daß die Ständer unten durch das Maschinenbett und oben durch ein Querhaupt oder einen Träger miteinander verbunden sind. In einer bevorzugten Ausgestaltung der Erfindung ist vorgesehen, daß das Werkzeugmagazin die Funktion des Querhauptes übernimmt. Alternativ ist vorgesehen, daß die Ständer ohne das Querhaupt mindestens ein Werkzeugmagazin tragen.

Als Werkzeugwechselvorrichtung ist insbesondere vorgesehen, daß ein Flächenportalroboter eingesetzt wird, der pro Spindel einen Doppelgreifer trägt. Die Werkzeuge werden im flächigen Magazin im hinteren Bereich der Maschine vorgehalten.

In einer bevorzugten Ausgestaltung der Erfindung ist vorgesehen, daß zumindest Teile des Gestells, nämlich Bett, Ständer, Querhaupt, Schlitten, Koppel, Spindelkasten, Pinolen usw. jeweils einzeln oder gemeinsam von Flüssigkeit durchströmt werden, um diese zu kühlen.

Des weiteren ist es günstig, wenn die Stäbe beziehungsweise Koppeln aus einem längenkonstanten Werkstoff, vorzugsweise faserverstärktem oder kohlefaserverstärktem Kunststoff gefertigt sind.

Für einen hochgenauen Antrieb ist vorgesehen, daß der Antrieb der Schlittenfüße als Linearmotoren ausgebildet sind.

Des weiteren ist es günstig, daß in dem Werkzeugspindelhalter Stellantriebe vorgesehen sind, mit denen die Positionen und/oder Ausrichtung mindestens einer Pinole verändert werden kann. Es ist zum Beispiel vorgesehen, eine Verschiebung in horizontaler oder vertikaler Richtung vorzusehen, oder auch eine Neigung um die X- oder Y-Achse.

Auch ist es günstig, daß sich innerhalb oder hinter jedem Ständer ein Gewichtsausgleich für die vertikal verfahrenden Massen befindet.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Werkzeugmaschine mit einer Werkzeugspindelhalterung, welche über mindestens einen Stab mit einem Schlittenfuß verbunden ist, und der Schlittenfuß auf einer Führung beweglich ist, und durch die Positionierung des Schlittenfußes eine Positionierung der Werkzeugspindelhalterung einhergeht, wobei die Werkzeugspindelhalterung zumindest zwei Werkzeugspindeln trägt.

2. Werkzeugmaschine nach Anspruch 1, **dadurch gekennzeichnet, daß** ein Gelenk (21) zwischen dem Stab (2) und dem Werkzeugspindelhalter (1) vorgesehen ist und der Stab (2) gelenkig mit dem Werkzeugspindelhalter (1) verbunden ist.

3. Werkzeugmaschine nach einem oder beiden der vorhergehenden Ansprüche, **dadurch gekennzeichnet, daß** ein Gelenk (23) zwischen dem Stab (2) und dem Schlittenfuß (3) vorgesehen ist.

4. Werkzeugmaschine nach einem oder mehreren der vorhergehenden Ansprüche, **dadurch gekennzeichnet, daß** zwischen der Führung (4) und dem Gestell (6) der Werkzeugmaschine ein Gelenk (230) vorgesehen ist.

5. Werkzeugmaschine nach einem oder mehreren der vorhergehenden Ansprüche, **dadurch gekennzeichnet, daß** der Stab (2) koppel (20)- beziehungsweise plattenartig ausgebildet ist.

6. Werkzeugmaschine nach einem oder mehreren der vorhergehenden Ansprüche, **dadurch gekennzeichnet, daß** der Stab (2) beziehungsweise die Koppel (20) aus faserverstärktem, insbesondere kohlefaserverstärktem Kunststoff besteht.

7. Werkzeugmaschine nach einem oder mehreren der vorhergehenden Ansprüche, **dadurch gekennzeichnet, daß** zwei oder mehrere Stäbe (2) beziehungsweise Koppeln (20) den Werkzeugspindelhalter (1) auf je einer Führung (4) abstützen.

8. Werkzeugmaschine nach einem oder mehreren der vorhergehenden Ansprüche, **gekennzeichnet durch** eine veränderliche Stab- beziehungsweise Koppellänge.

9. Werkzeugmaschine nach einem oder mehreren der vorhergehenden Ansprüche, **dadurch gekennzeichnet, daß** auf mindestens einer Führung (4) der Werkzeugmaschine mindestens ein Schlittenfuß (3) vorgesehen ist und jeder Schlittenfuß (3) mindestens einen Stab (2) oder eine Koppel (20) gelenkig aufnimmt.

10. Werkzeugmaschine nach einem oder mehreren der vorhergehenden Ansprüche, **dadurch gekennzeichnet, daß** sich der Werkzeugspindelhalter (1) pro Führung (4) über zwei Stäbe (2) beziehungsweise Koppeln (20) abstützt und jeder Stab (2) beziehungsweise jede Koppel (20) über je einen eigenen Schlittenfuß (3) auf der Führung (4) gelagert ist.

11. Werkzeugmaschine nach einem oder mehreren der vorhergehenden Ansprüche, **dadurch gekennzeichnet, daß** die Schlittenfüße (3) auf einer gemeinsamen Führung (4), insbesondere für Maß- oder Spielkorrekturen, unterschiedlich bewegt werden.

12. Werkzeugmaschine nach einem oder mehreren der vorhergehenden Ansprüche, **dadurch gekennzeichnet, daß** die Werkzeugmaschine zwei, drei oder vier Führungen (4) aufweist, und der Werkzeugspindelhalter (1) zwischen den Führungen (4) angeordnet ist.

13. Werkzeugmaschine nach einem oder mehreren der vorhergehenden Ansprüche, **dadurch gekennzeichnet, daß** der Werkzeugspindelhalter (1) über zwei Stäbe (2) beziehungsweise Koppeln (20), insbesondere parallelogrammartig auf der Führung (4) abgestützt ist.

14. Werkzeugmaschine nach einem oder mehreren der vorhergehenden Ansprüche, **dadurch gekennzeichnet, daß** der Werkzeugspindelhalter (1) über drei Koppeln (20) beziehungsweise Stäbe (2) auf zwei Führungen (4) abgestützt ist.

15. Werkzeugmaschine nach einem oder mehreren der vorhergehenden Ansprüche, **dadurch gekennzeichnet, daß** sich die Stäbe (2) beziehungsweise Koppeln (20) kreuzen.

16. Werkzeugmaschine nach einem oder mehreren der vorhergehenden Ansprüche, **dadurch gekennzeichnet, daß** eine erste Koppel (20) beziehungsweise ein erster Stab (2) durch eine zweite Koppel, insbesondere gelenkig abgestützt ist.

17. Werkzeugmaschine nach einem oder mehreren der vorhergehenden Ansprüche, **dadurch gekennzeichnet, daß** der Stab (2) beziehungsweise die Koppel (20) durch ein Kniegelenk (603) in zwei Teile (601, 602) unterteilt ist.

18. Werkzeugmaschine nach einem oder mehreren der vorhergehenden Ansprüche, **dadurch gekennzeichnet, daß** auf das Kniegelenk (603) ein Zug- beziehungsweise Stellmittel (605) wirkt.

19. Werkzeugmaschine nach einem oder mehreren der vorhergehenden Ansprüche, **gekennzeichnet durch** gleiche Länge der Stäbe beziehungsweise Koppeln.

20. Werkzeugmaschine nach einem oder mehreren der vorhergehenden Ansprüche, **dadurch gekennzeichnet, daß** die Gelenke (21) der beiden Stäbe (2) oder Koppeln (20) in Richtung der Führung (4) hintereinander, insbesondere auf einer zur Führung parallelen Linie an dem Werkzeugspindelhalter (1) angeordnet sind.

21. Werkzeugmaschine nach einem oder mehreren der vorhergehenden Ansprüche, **dadurch gekennzeichnet, daß** die Gelenke (21) am Spindelkasten der beiden Stäbe (2) beziehungsweise Koppeln (20), die sich auf einer Führung (4) abstützen, auf einer Linie angeordnet sind, die die Führung (4) in einem spitzen Winkel schneidet.

22. Werkzeugmaschine nach einem oder mehreren der vorhergehenden Ansprüche, **dadurch gekennzeichnet, daß** zumindest an einem der Gelenke (21) des Spindelkastens (1) zumindest zwei Koppeln (20) beziehungsweise Stäbe (2) anschließen.

23. Werkzeugmaschine nach einem oder mehreren der vorhergehenden Ansprüche, **dadurch gekennzeichnet, daß** zwei Koppeln (20) beziehungsweise Stäbe (2) winkelsteif an einem gemeinsamen Gelenk (21) des Werkzeugspindelhalters (1) anschließen.

24. Werkzeugmaschine nach einem oder mehreren der vorhergehenden Ansprüche, **dadurch gekennzeichnet, daß** an dem Gestell (6) der Werkzeugmaschine ein Gelenk (230) vorgesehen ist, an welchem eine Führung (4) gelenkig gelagert ist und das vordere Ende des Stabes (2) beziehungsweise der Koppel (20) als Schlittenfuß dient.

25. Werkzeugmaschine nach einem oder mehreren der vorhergehenden Ansprüche, **dadurch gekennzeichnet, daß** der Abstand (b) der Gelenke (21, 21') zwischen zwei Koppeln (20) beziehungsweise Stäben (2) am Werkzeugspindelhalter (1) gleich dem Abstand (a) der Gelenke (23, 23') am jeweiligen Schlittenfuß (3) ist.

26. Werkzeugmaschine nach einem oder mehreren der vorhergehenden Ansprüche, **dadurch gekennzeichnet, daß** der Abstand (b) der Gelenke (21, 21') zwischen zwei Koppeln (20) beziehungsweise Stäben (2) am Werkzeugspindelhalter (1) ungleich dem Abstand (a) der Gelenke (23, 23') am jeweiligen Schlittenfuß (3) ist.

27. Werkzeugmaschine nach einem oder mehreren der vorhergehenden Ansprüche, **dadurch gekennzeichnet, daß** die Drehachsen der n Gelenke am Werkzeugspindelhalter (1) ein gleichseitiges n-Eck ergeben.

28. Werkzeugmaschine nach einem oder mehreren der vorhergehenden Ansprüche, **gekennzeichnet durch** einen Drehantrieb des Stabes (2) beziehungsweise der Koppel (20) für eine Drehung um das Gelenk (21, 23).

29. Werkzeugmaschine nach einem oder mehreren der vorhergehenden Ansprüche, **dadurch gekennzeichnet, daß** für den Schlittenfuß (3) auf der Führung (4) ein Antrieb, insbesondere ein Spindelantrieb, Kugelrollspindelantrieb oder ein Linearantrieb vorgesehen ist.

30. Werkzeugmaschine nach einem oder mehreren der vorhergehenden Ansprüche, **dadurch gekennzeichnet, daß** die Führung (4) im wesentlichen parallel oder rechtwinklig zur Spindelachse (51) orientiert ist.

31. Werkzeugmaschine nach einem oder mehreren der vorhergehenden Ansprüche, **dadurch gekennzeichnet, daß** die Führung (4) vertikal oder horizontal orientiert ist.

32. Werkzeugmaschine nach einem oder mehreren der vorhergehenden Ansprüche, **gekennzeichnet durch** einen L-förmigen Schlittenfuß (30).

33. Werkzeugmaschine nach einem oder mehreren der vorhergehenden Ansprüche, **dadurch gekennzeichnet, daß** jeder Schlittenfuß (3) seine eigene Führung (4) aufweist oder eine Führung (4) mehrere oder alle Schlittenfüße (3) führt.

34. Werkzeugmaschine nach einem oder mehreren der vorhergehenden Ansprüche, **dadurch gekennzeichnet, daß** die Führung (4) selber schlittenartig ausgebildet auf einer Führungsbahn positionierbar ist.

35. Werkzeugmaschine nach einem oder mehreren der vorhergehenden Ansprüche, **dadurch gekennzeichnet, daß** der Werkzeugspindelhalter (1) als Spindelkasten (10) ausgebildet ist oder einen Spindelkasten (10) trägt und der Spindelkasten (10) die Werkzeugspindel (5) aufnimmt oder der Werkzeugspindelhalter (1) die Werkzeugspindeln hängend trägt.

36. Werkzeugmaschine nach einem oder mehreren der vorhergehenden Ansprüche, **gekennzeichnet durch** einen Werkzeugspindelhalter (1) beziehungsweise Spindelkasten (10) aus Aluminium.

37. Werkzeugmaschine nach einem oder mehreren der vorhergehenden Ansprüche, **dadurch gekennzeichnet, daß** die Werkzeugspindel (5) beziehungsweise der Spindelkasten (10) bezüglich der Werkzeugspindelhalterung (1) verdrehbar ist und/oder die Werkzeugspindel (5) auf der Werkzeugspindelhalterung (1) sowohl in Spindelachsrichtung (51) wie auch rechtwinklig hierzu bewegbar und auch positionierbar ist.

38. Werkzeugmaschine nach einem oder mehreren der vorhergehenden Ansprüche, **dadurch gekennzeichnet, daß** an dem Werkzeugspindelhalter (1) eine Führung (25) für den Stab (2) beziehungsweise der Koppel (20) vorgesehen ist.

39. Werkzeugmaschine nach einem oder mehreren der vorhergehenden Ansprüche, **dadurch gekennzeichnet, daß** ein Werkzeugmagazin im Bereich der Werkzeugspindel beziehungsweise überhalb der Werkzeugspindel vorgesehen ist.

40. Werkzeugmaschine nach einem oder mehreren der vorhergehenden Ansprüche, **dadurch gekennzeichnet, daß** für jede Werkzeugspindel (1) ein eigenes Werkzeugmagazin, zum Beispiel ein Scheibenmagazin, vorgesehen ist.

41. Werkzeugmaschine nach einem oder mehreren der vorhergehenden Ansprüche, **dadurch gekennzeichnet, daß** ein insbesondere am Werkzeugspindelhalter und/oder am Schlittenfuß, gegebenenfalls gelenkig gelagerter Gewichtsausgleich vorgesehen ist.
